# EUROPÄISCHE PATENTSCHRIFT

(11) **EP 2 338 593 B1**
(45) Veröffentlichungstag und Bekanntmachung des Hinweises auf die Patenterteilung: **19.06.2013**
(21) Anmeldenummer: 11158560.0
(22) Anmeldetag: 09.01.2007
(51) Int. Cl.: B01J 31/22, C07F 15/00, H01J 1/62

(54) **Verfahren zur Herstellung von Übergangsmetall-Carbenkomplexen**
Process for the preparation of transition metal carbene complexes
Procédé pour la préparation des complexes de carbenes des métals de transitions

(30) Priorität: 31.01.2006 EP 06101109
(43) Veröffentlichungstag der Anmeldung: 29.06.2011
(62) Teilanmeldung aus: 07703742.2
(73) Patentinhaber: BASF SE, 67056 Ludwigshafen (DE)
(72) Erfinder: Molt, Oliver, 69469 Weinheim (DE); Fuchs, Evelyn, 68199 Mannheim (DE); Egen, Martina, 69221 Dossenheim (DE); Kahle, Klaus, 67069 Ludwigshafen (DE); Lennartz, Christian, 67105 Schifferstadt (DE)

(56) Entgegenhaltungen:
- NOELS ET AL: "Evaluation of ruthenium-based complexes for the controlled radical polymerization of vinyl monomers", CAN. J. CHEM., Bd. 79, 2001, Seiten 529-535, XP002425066,

## Beschreibung

Die vorliegende Erfindung betrifft ein Verfahren zur Herstellung von cyclometallierten Übergangsmetall-Carbenkomplexen enthaltend mindestens einen Carbenliganden umfassend die Umsetzung eines Ligandvorläufers mit einer Base, einem Hilfsreagenz und einem Metallkomplex enthaltend mindestens ein Metall M¹ (Weg A). Des Weiteren betrifft die vorliegende Erfindung die Verwendung eines Hilfsreagenzes ausgewählt aus Salzen enthaltend gemeinsam mit einer Base in einem Verfahren zur Herstellung von cyclometallierten Metallkomplexen.

In organischen Licht-emittierenden Dioden (OLED) wird die Eigenschaft von Materialien ausgenutzt, Licht zu emittieren, wenn sie durch elektrischen Strom angeregt werden. OLEDs sind insbesondere interessant als Alternative zu Kathodenstrahlröhren und Flüssigkristalldisplays zur Herstellung von Flachbildschirmen. Aufgrund der sehr kompakten Bauweise und des intrinsisch niedrigeren Stromverbrauchs eignen sich Vorrichtungen, enthaltend OLEDs insbesondere für mobile Anwendungen, zum Beispiel für Anwendungen in Handys, Laptops usw.

Es wurden zahlreiche Materialien vorgeschlagen, die bei der Anregung durch elektrischen Strom Licht emittieren.

In WO2005/019373 wird die Verwendung von Übergangsmetallkomplexen enthaltend mindestens einen Carbenliganden in organischen Licht-emittierenden Dioden (OLEDs) offenbart. Diese werden durch Deprotonierung von den entsprechenden Ligandvorläufern und anschließende Umsetzung mit geeigneten, das gewünschte Metall enthaltenden, Metallkomplexen ohne Zugabe weiterer Hilfsreagenzien hergestellt, wobei die Ausbeuten der erhaltenen Übergangsmetallkomplexe zum Teil verbesserungswürdig sind.

Im Stand der Technik sind Verfahren bekannt, worin Übergangsmetallcarbenkomplexe in Anwesenheit von Silber enthaltenden Hilfsreagenzien hergestellt werden. Bekannte Verfahren betreffen insbesondere den Einsatz von Ag₂O zur Herstellung von Silber-Carbenkomplexen und anschließenden Carben-Transfer auf andere Metalle sowie den Einsatz von Silbersalzen wie AgBF₄, AgCO₂CF₃, AgPF₆, AgOTf zur Halogenidabstraktion bzw. zum Anionenaustausch in Metallcarbenkomplexen.

Mark E. Thompson et al., Inorganic Chemistry, 2005, 44, 7992-8003 betrifft IridiumKomplexe mit cyclometallierten N-heterocyclischen Carbenliganden (NHC). Die Herstellung von Iridium-Komplexen, die drei cyclometallierte Carbenliganden (C∧C:) tragen, erfolgt durch Umsetzung der entsprechenden Imidazolium- (pmiH⁺) oder Benzimidazoliumiodidsalze (pmbH⁺) mit Silber(I)oxid (Ag₂O) und Iridium(III)chlorid-Hydrat unter Rückfluss in 2-Ethoxyethanol in einem Schritt, wobei eine Mischung der gewünschten fac- und *mer*-Ir(C∧C:)₃-Komplexe in geringen Ausbeuten (gemäß der Beschreibung <10%) gemeinsam mit einem Produkt der folgenden Formel erhalten wird: [(C∧C:)₂lrCl]₂. Das Produkt der Formel [(C∧C:)₂lrCl]₂ kann wiederum mit den entsprechenden Imidazolium- oder Benzimidazoliumiodidsalzen und Ag₂O in 1,2-Dichlorethan zu fac- und *mer*-Ir(C∧C:)₃-Komplexen umgesetzt werden, um die Ausbeute zu erhöhen.

WO2005/113704 betrifft lumineszierende Verbindungen, die Carbenliganden tragen. Bei den Verbindungen kann es sich unter anderem um Iridium-(Benz-)Imidazolyliden-Carbenkomplexe handeln. Diese werden gemäß den Beispielen durch Umsetzung der entsprechenden (Benz-)Imidazoliumiodidsalze mit Ag₂O und Iridium(III)chlorid-Hydrat in einer Stufe hergestellt, wobei die Ausbeuten der gewünschten Iridiumkomplexe gering sind.

Steven P. Nolan et al. J. Am. Chem. Soc. 2004, 126, 5054-5055 betrifft cyclometallierte N-heterocyclische Carbenkomplexe (NHC) des Rhodiums. Gemäß der Beschreibung wird der doppelt cyclometallierte Komplex RhCl(N,N-Di(tert-butyl)imidazol-2-yliden))₂ durch Umsetzung von [Rh(COE)₂Cl]₂ mit N,N-Di(tert-butyl)imidazol-2-yliden) in Benzol hergestellt. Dieser kann in einer weiteren Stufe zu einem 14-Elektronen-Rh(III)-Komplex durch Umsetzung mit AgPF₆ in CH₂Cl₂ umgesetzt werden. Das Silbersalz wird in Steven P. Nolan et al. zur Abstraktion von Cl⁻ eingesetzt. Eine CH-Aktivierung liegt bereits vor der Zugabe des Silbersalzes vor.

Alfred F. Noels et al., Can. J. Chem. 79: 529-535 (2001) betrifft unter anderem die Herstellung des cyclometallierten Ru-Komplexes RuCl(p-cymen)(triazolinyliden) durch stöchiometrische Reaktion von Triazolinyliden-Carben (1,3,4-Triphenyl-4,5-dihydro-1*H-*1,2,4-triazol-5-yliden) mit dem dimeren Ru-Komplex [RuCl₂(p-cymene)]₂ unter Zugabe eines Überschusses einer Base (EtN-i-Pr₂). Aus diesem Komplex wird durch Abstraktion von Cl⁻ mit AgBF₄ in Acetonitril der entsprechende kationische Komplex erhalten. In Alfred F. Noels et al. wird das Silbersalz somit - wie in Steven P. Nolan et al. - zur Abstraktion von Cl⁻ eingesetzt. Eine CH-Aktivierung liegt bereits vor der Zugabe des Silbersalzes vor.

Aufgabe der vorliegenden Erfindung ist die Bereitstellung eines Verfahrens zur Herstellung von cyclometallierten Carbenkomplexen, insbesondere Ir(III)-Carbenkomplexen, wobei die Komplexe in guten Ausbeuten bei einfacher Reaktionsführung erhalten werden.

Diese Aufgabe wird gelöst durch ein Verfahren zur Herstellung von cyclometallierten Carbenkomplexen der allgemeinen Formel (I) enthaltend mindestens einen Carbenliganden 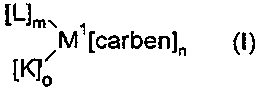 worin die Symbole die folgenden Bedeutungen aufweisen:
- M¹: Metallatom ausgewählt aus der Gruppe bestehend aus Ir, Co, Rh, Ni, Pd, Pt, Fe, Ru, Os, Cr, Mo, W, Mn, Tc, Re, Cu und Au, bevorzugt Ir, Os, Ru, Rh, Pd, Co und Pt, besonders bevorzugt Ir, Pt, Rh und Os, ganz besonders bevorzugt Ir, in jeder für das entsprechende Metallatom möglichen Oxidationsstufe, weiter bevorzugt Ir(I) und Ir(III), und insbesondere Ir(III);
- L: mono- oder dianionischer Ligand, der bidentat ist;
- K: neutraler mono- oder bidentater Ligand;
- n: Zahl der Carbenliganden, wobei n mindestens 1, bevorzugt mindestens 2, ist und die Carbenliganden in dem Komplex der Formel I bei n >1 gleich oder verschieden sein können;
- m: Zahl der Liganden L, wobei m 0 oder ≥ 1 sein kann und die Liganden L bei m > 1 gleich oder verschieden sein können;
- o: Zahl der Liganden K, wobei o 0 ist;
wobei die Summe n + m von der Oxidationsstufe und Koordinationszahl des eingesetzten Metallatoms und von der Zähnigkeit der Liganden carben und L sowie von der Ladung der Liganden carben und L abhängig ist, mit der Bedingung, dass n mindestens 1 ist;
- carben: Carbenligand ausgewählt ist aus der Gruppe bestehend aus 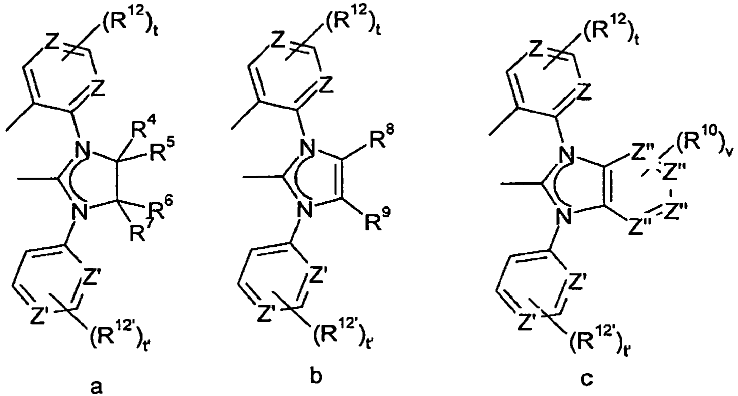 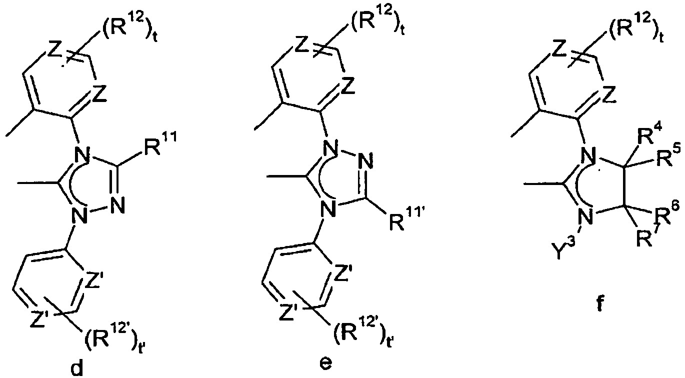 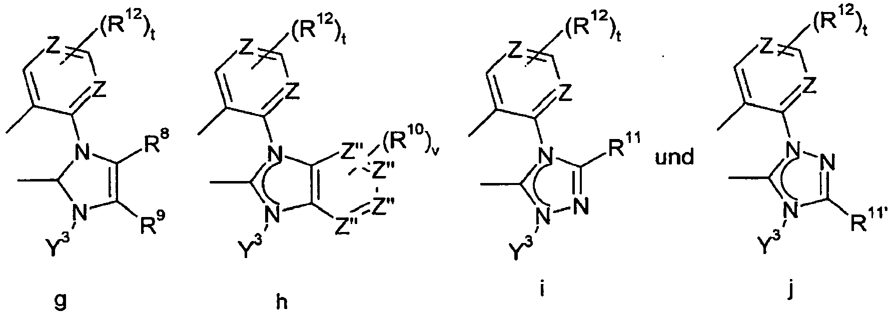
worin die Symbole die folgenden Bedeutungen aufweisen:
- Z, Z', Z": gleich oder verschieden CH oder N
- R¹², R^{12'}: gleich oder verschieden ein Alkyl-, Aryl-, Heteroaryl-, Alkinyl- oder Alkenylrest, oder jeweils 2 Reste R¹² bzw. R^{12'} bilden gemeinsam einen anellierten Ring, der gegebenenfalls mindestens ein Heteroatom enthalten kann, oder R¹² bzw. R^{12'} bedeutet einen Rest mit Donor- oder Akzeptorwirkung;
- t und t': gleich oder verschieden 0 bis 4, wobei, wenn t bzw. t' > 1 ist, die Reste R¹² bzw. R^{12'} gleich oder verschieden sein können;
- R⁴, R⁵, R⁶,R⁷, R⁸, R⁹und R¹¹: Wasserstoff, Alkyl, Aryl, Heteroaryl, Alkinyl oder Alkenyl oder ein Rest mit Donor- oder Akzeptorwirkung;
- R¹⁰: Alkyl, Aryl, Heteroaryl, Alkinyl oder Alkenyl oder jeweils 2 Reste R¹⁰ bilden gemeinsam einen anellierten Ring, der gegebenenfalls mindestens ein Heteroatom enthalten kann, oder R¹⁰ bedeutet einen Rest mit Donor- oder Akzeptorwirkung;
weiterhin kann die Gruppe der Struktur 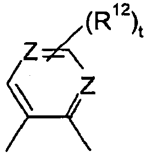 über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R³ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:

Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei
- x: 2 bis 10;
und
- R¹⁸, R¹⁹, R²⁰, R²¹, R²², R³⁰, R³¹: H, Alkyl, Aryl, Heteroaryl, Alkenyl, Alkinyl
bedeuten;
wobei in den Fällen, worin die Gruppe der Struktur 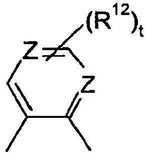 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
- v: 0 bis 4, wobei, wenn v 0 ist, die vier Kohlenstoffatome des Arylrests in Formel c und h, die gegebenenfalls mit R¹⁰ substituiert sind, Wasserstoffatome tragen;
- Y³: Wasserstoff, ein Alkyl-, Aryl-, Heteroaryl-, Alkinyl- oder Alkenylrest,
umfassend die Umsetzung eines Ligandvorläufers ausgewählt aus der Gruppe bestehend aus 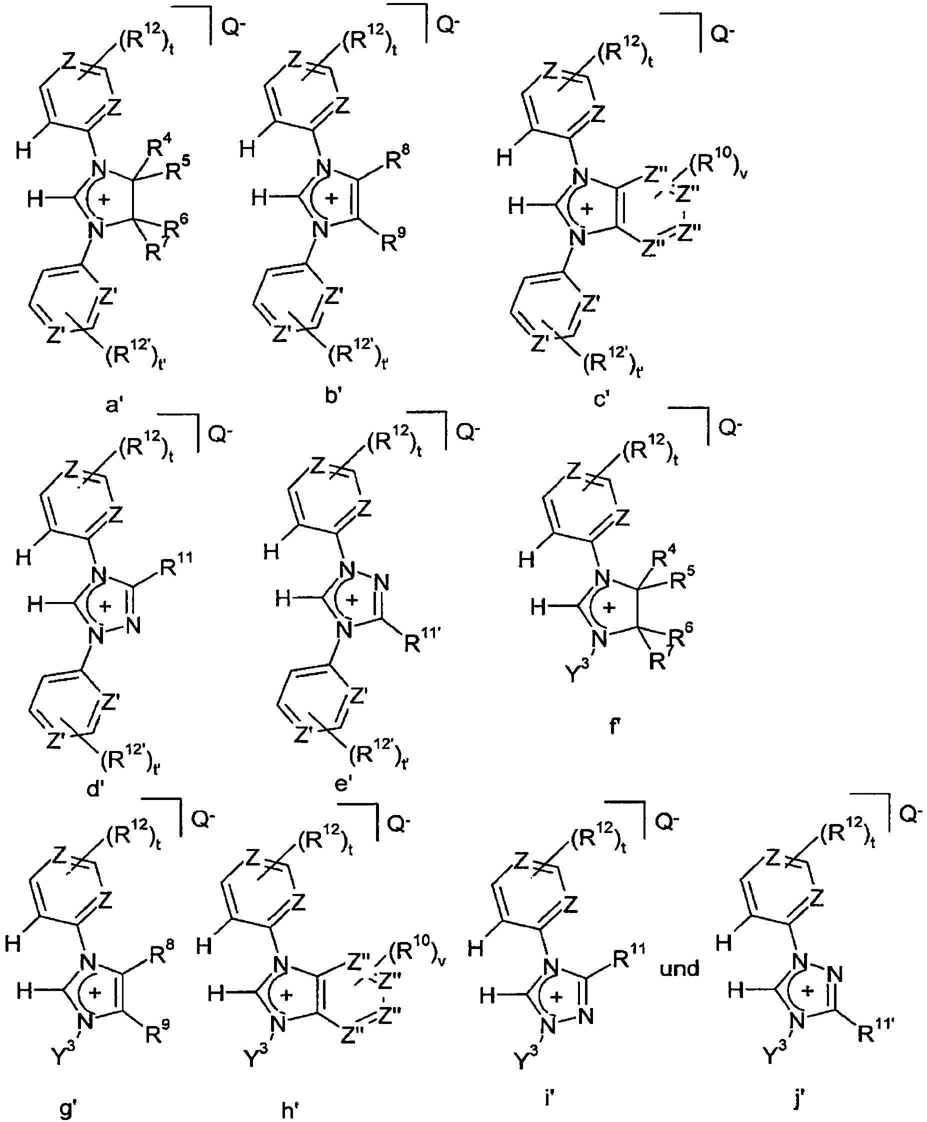 worin
- Q⁻: ein monoanionisches Gegenion, bevorzugt Halogenid, Pseudohalogenid, BF₄⁻, BPh₄⁻, PF₆⁻, AsF₆⁻ oder SbF₆⁻;
bedeutet, und
die weiteren Symbole in dem Ligandvorläufer die bezüglich dem Liganden der Formel II genannten Bedeutungen aufweisen,
wobei
die Umsetzung den Einsatz einer Base und eines Hilfsreagenzes ausgewählt aus Salzen des Ag (Weg A) umfasst, wobei der Ligandvorläufer
(A) mit der Base, einem Metallkomplex enthaltend mindestens ein Metall M¹ und dem Hilfsreagenz umgesetzt wird (Weg A);
wobei ein cyclometallierter Metallkomplex der Formel I erhalten wird.

Mit Hilfe des erfindungsgemäßen Verfahrens ist die Herstellung von cyclometallierten Übergangsmetall-Carbenkomplexen in guten Ausbeuten bei einfacher Reaktionsführung möglich.

Unter einem bidentaten Liganden ist ein Ligand zu verstehen, der an zwei Stellen an das Übergangsmetallatom M¹ koordiniert ist. Im Sinne der vorliegenden Anmeldung wird der Begriff "zweizähnig" synonym mit dem Begriff "bidentat" verwendet.

Unter einem monodentaten Liganden ist ein Ligand zu verstehen, der an einer Stelle des Liganden mit dem Übergangsmetallatom M¹ koordiniert.

In Abhängigkeit von der Koordinationszahl des eingesetzten Metalls M¹ und der Natur und Zahl der eingesetzten Liganden L, K und carben können verschiedene Isomere der entsprechenden Metallkomplexe bei gleichem Metall M¹ und gleicher Natur und Zahl der eingesetzten Liganden K, L und carben vorliegen. Zum Beispiel sind bei Komplexen mit einem Metall M¹ mit der Koordinationszahl 6 (also oktaedrischen Komplexen), zum Beispiel Ir(III)-Komplexen, sowohl cis/trans-Isomere möglich, wenn es sich um Komplexe der allgemeinen Zusammensetzung MA₂B₄ handelt, als auch fac-mer-Isomere (facial/meridional-Isomere), wenn es sich um Komplexe der allgemeinen Zusammensetzung MA₃B₃ handelt. Bei quadratisch planaren Komplexen mit einem Metall M¹ mit der Koordinationszahl 4, zum Beispiel Pt(II)-Komplexen, sind cis/trans-Isomere möglich, wenn es sich um Komplexe der allgemeinen Zusammmensetzung MA₂B₂ handelt. Bei den Symbolen A und B handelt es sich jeweils um eine Bindungsstelle eines Liganden, wobei nicht nur monodentate, sondern auch bidentate Liganden vorliegen können. Ein unsymmetrischer bidentater Ligand weist gemäß der vorstehend erwähnten allgemeinen Zusammensetzung eine Gruppe A und eine Gruppe B auf.

Dem Fachmann ist bekannt, was unter cis/trans- bzw. fac-mer-Isomeren zu verstehen ist. Bei oktaedrischen Komplexen bedeutet cis-Isomerie, dass bei Komplexen der Zusammensetzung MA₂B₄ die beiden Gruppen A benachbarte Ecken eines Oktaeders belegen, während die beiden Gruppen A bei der trans-Isomerie einander gegenüber liegende Ecken eines Oktaeders belegen. Bei Komplexen der Zusammensetzung MA₃B₃ können drei Gruppen der gleichen Art entweder die Ecken einer Oktaederfläche besetzen (faciales Isomer) oder einen Meridian, das heißt zwei der drei Ligandenbindungsstellen sind zueinander trans-ständig (meridionales Isomer). Bezüglich der Definition von cis/trans-Isomeren bzw. fac-mer-Isomeren in oktaedrischen Metallkomplexen siehe zum Beispiel J. Huheey, E. Keiter, R. Keiter, Anorganische Chemie: Prinzipien von Struktur und Reaktivität, 2., neu bearbeitete Auflage, übersetzt und erweitert von Ralf Steudel, Berlin; New York: de Gruyter, 1995, Seiten 575, 576.

Bei quadratisch planaren Komplexen bedeutet cis-Isomerie, dass bei Komplexen der Zusammensetzung MA₂B₂ sowohl die beiden Gruppen A als auch die beiden Gruppen B benachbarte Ecken eines Quadrats belegen, während sowohl die beiden Gruppen A als auch die beiden Gruppen B bei der trans-Isomerie jeweils die beiden einander diagonal gegenüber liegenden Ecken eines Quadrats belegen. Bezüglich der Definition von cis/trans-Isomeren in quadratisch planaren Metallkomplexen siehe zum Beispiel J. Huheey, E. Keiter, R, Keiter, Anorganische Chemie: Prinzipien von Struktur und Reaktivität, 2., neu bearbeitete Auflage, übersetzt und erweitert von Ralf Stendel, Berlin; New York: de Gruyter, 1995, Seiten 557 bis 559.

Im Allgemeinen können die verschiedenen Isomere der Metallkomplexe der Formel I nach dem Fachmann bekannten Verfahren, zum Beispiel durch Chromatographie, Sublimation oder Kristallisation, getrennt werden.

Die vorliegende Erfindung betrifft somit sowohl die Herstellung jeweils einzelner Isomere der Übergangsmetallkomplexe der Formel I als auch die Herstellung von Gemischen verschiedener Isomere in jedem beliebigen Mischungsverhältnis.

Besonders bevorzugt weisen die erfindungsgemäß hergestellten Übergangsmetall-komplexe der allgemeinen Formel I ein Metallatom M¹ ausgewählt aus der Gruppe bestehend aus Ir, Os, Rh und Pt auf, wobei Os(II), Rh(III), Ir(I), Ir(III) und Pt(II) bevorzugt sind. Besonders bevorzugt wird Ir eingesetzt, bevorzugt Ir(I) und Ir(III), ganz besonders bevorzugt Ir(III).

Geeignete mono- oder dianionische Liganden L, bevorzugt monoanionische Liganden L, die bidentat sind, sind die üblicherweise als mono- oder bidentate mono- oder dianionische Liganden eingesetzten Liganden.

Geeignete monoanionische bidentate Liganden sind zum Beispiel Acetylacetonat und dessen Derivate, Picolinat, Schiffsche Basen, Aminosäuren, Arylazole, z.B. Phenylpyridin sowie die weiteren in WO 02/15645 genannten bidentaten monoanionischen Liganden, wobei Acetylacetonat, und Picolinat bevorzugt sind.

Geeignete dianionische bidentate Liganden sind zum Beispiel Dialkoholate, Dicarbonate, Dicarboxylate, Diamide, Diimide, Dithiolate, Biscyclopentadienyle, Bisphosphonate, Bissulfonate und 3-Phenylpyrazol.

Geeignete neutrale mono- oder bidentate Liganden K sind bevorzugt ausgewählt aus der Gruppe bestehend aus Phosphinen, sowohl Mono- als auch Bisphosphinen; Phosphonaten, sowohl Mono- als auch Bisphosphonaten, und Derivaten davon, Arsenaten, sowohl Mono- als auch Bisarsenaten, und Derivaten davon; Phosphiten, sowohl Mono- als auch Bisphosphiten; CO; Pyridinen, sowohl Mono- als auch Bispyridinen; Nitrilen, Dinitrilen, Allyl, Düminen, nicht konjugierten Dienen und konjugierten Dienen, die einen π-Komplex mit M¹ bilden. Besonders bevorzugte neutrale mono- oder bidentate Liganden K sind ausgewählt aus der Gruppe bestehend aus Phosphinen, sowohl Mono- als auch Bisphosphinen, bevorzugt Trialkyl-, Triaryl- oder Alkylarylphosphinen, besonders bevorzugt PAr₃, wobei Ar ein substituierter oder unsubstituierter Arylrest ist und die drei Arylreste in PAr₃ gleich oder verscheiden sein können, besonders bevorzugt PPh₃, PEt₃, PnBu₃, PEt₂Ph, PMe₂Ph, PnBu₂Ph; Phosphonaten und Derivaten davon, Arsenaten und Derivaten davon, Phosphiten, CO; Pyridinen, sowohl Mono- als auch Bispyridinen, wobei die Pyridine mit Alkyl- oder Arylgruppen substituiert sein können; Nitrilen und Dienen, die einen π-Komplex mit M¹ bilden, bevorzugt η⁴-Diphenyl-1,3-butadien, η⁴-1,3-Pentadien, η ⁴-1-Phenyt-1,3-pentadien, η⁴-1,4-Dibenzyl-1,3-butadien, η⁴-2,4-Hexadien, η ⁴-3-Methyl-1,3-pentadien, η⁴-1,4-Ditotyl-1,3-butadien, η⁴-1,4-Bis(trimethylsilyl)-1,3-butadien und η²- oder η ⁴-Cyclooctadien (je 1,3 und je 1,5), besonders bevorzugt 1,4-Diphenyl-1,3-butadien, 1-Phenyl-1,3-pentadien, 2,4-Hexadien, Butadien, n²-Cycloocten, η⁴-1,3-Cyclooctadien und η⁴-1,5-Cyclooctadien. Ganz besonders bevorzugte neutrale monodentate Liganden sind ausgewählt aus der Gruppe bestehend aus PPh₃, P(OPh)₃, AsPh₃, CO, Pyridin, Nitrilen und deren Derivaten. Geeignete neutrale mono- bzw. bidentate Liganden sind bevorzugt 1,4-Diphenyl-1,3-butadien, 1-Phenyl-1,3-pentadien, 2,4-Hexadien, η⁴-Cyclooctadien und η²-Cyclooctadien (je 1,3 und je 1,5).

Die Zahl n der Carbenliganden beträgt in neutralen Übergangsmetallkomplexen, worin das Übergangsmetallatom Ir(III) eine Koordinationszahl von 6 aufweist, 1 bis 3, bevorzugt 2 oder 3, besonders bevorzugt 3. Ist n > 1 können die Carbenliganden gleich oder verschieden sein.

Die Zahl n der Carbenliganden beträgt in Übergangsmetallkomplexen, worin das Übergangsmetallatom Pt(II) eine Koordinationszahl von 4 aufweist, 1 oder 2, bevorzugt 2. Ist n > 1 können die Carbenliganden gleich oder verschieden sein.

Die Zahl m der monoanionischen Liganden L beträgt in dem vorstehend genannten Fall 0 bis 2, bevorzugt 0 bis 1, besonders bevorzugt 0. Ist m > 1 können die Liganden L gleich oder verschieden sein, bevorzugt sind sie gleich.

Die Zahl o der neutralen Liganden K ist 0.

Im Folgenden sind bevorzugte verbrückte Strukturen beispielhaft genannt. Die dargestellten Brücken können in den erwähnten Ligandsystemen der Formeln IIa bis j, vorkommen.

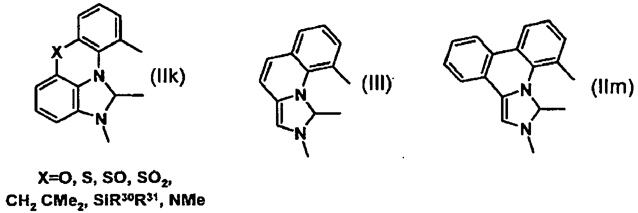

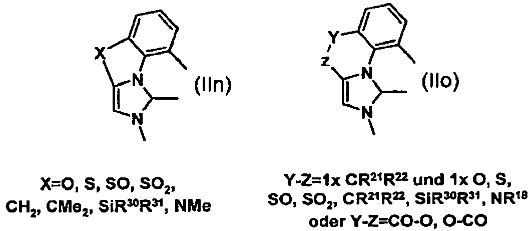

Die Reste R¹⁸, R²⁰, R²¹, R³⁰ und R³¹ wurden bereits vorstehend definiert.

Im Sinne der vorliegenden Anmeldung haben die Begriffe Arylrest oder -gruppe, Heteroarylrest oder -gruppe, Alkylrest oder -gruppe und Alkenylrest oder -gruppe und Alkinylrest oder -gruppe die folgenden Bedeutungen:

Unter einem Arylrest (oder -gruppe) ist ein Rest mit einem Grundgerüst von 6 bis 30 Kohlenstoffatomen, bevorzugt 6 bis 18 Kohlenstoffatomen zu verstehen, der aus einem aromatischen Ring oder mehreren kondensierten aromatischen Ringen aufgebaut ist. Geeignete Grundgerüste sind zum Beispiel Phenyl, Naphthyl, Anthracenyl oder Phenanthrenyl. Dieses Grundgerüst kann unsubstituiert sein (d. h., dass alle Kohlenstoffatome, die substituierbar sind, Wasserstoffatome tragen), oder an einer, mehreren oder allen substituierbaren Positionen des Grundgerüsts substituiert sein. Geeignete Substituenten sind zum Beispiel Alkylreste, bevorzugt Alkylreste mit 1 bis 8 Kohlenstoffatomen, besonders bevorzugt Methyl, Ethyl oder i-Propyl, Arylreste, bevorzugt C₆-Arylreste, die wiederum substituiert oder unsubstituiert sein können, Heteroarylreste, bevorzugt Heteroarylreste, die mindestens ein Stickstoffatom enthalten, besonders bevorzugt Pyridylreste, Alkenylreste, bevorzugt Alkenylreste, die eine Doppelbindung tragen, besonders bevorzugt Alkenylreste mit einer Doppelbindung und 1 bis 8 Kohlenstoffatomen, oder Gruppen mit Donor- oder Akzeptorwirkung. Geeignete Gruppen, mit Donor- oder Akzeptorwirkung sind nachstehend genannt. Ganz besonders bevorzugt tragen die Arylreste Substituenten ausgewählt aus der Gruppe bestehend aus Methyl, F, Cl, CN, Aryloxy und Alkoxy. Bevorzugt ist der Arylrest oder die Arylgruppe ein C₆-C₁₈-Arylrest, besonders bevorzugt ein C₆-Arylrest, der gegebenenfalls mit mindestens einem der vorstehend genannten Substituenten substituiert ist. Besonders bevorzugt weist der C₆-C₁₈-Arylrest, bevorzugt C₆-Arylrest, einen oder zwei der vorstehend genannten Substituenten auf, wobei im Falle eines C₆-Arylrests der eine Substituent in ortho-, meta- oder para-Position zur weiteren Verknüpfungsstelle des Arylrestes angeordnet ist, und - im Falle von zwei Substituenten - können diese jeweils in meta-Position oder ortho-Position zur weiteren Verknüpfungsstelle des Arylrestes angeordnet sein oder ein Rest ist in ortho-Position und ein Rest in meta-Position angeordnet oder ein Rest ist in ortho- oder meta-Position angeordnet und der weitere Rest ist in para-Position angeordnet.

Unter einem Heteroarylrest oder einer Heteroarylgruppe sind Reste zu verstehen, die sich von den vorstehend genannten Arylresten dadurch unterscheiden, dass in dem Grundgerüst der Arylreste mindestens ein Kohlenstoffatom durch ein Heteroatom ersetzt ist. Bevorzugte Heteroatome sind N, O und S. Ganz besonders bevorzugt sind ein oder zwei Kohlenstoffatome des Grundgerüsts der Arylreste durch Heteroatome ersetzt. Insbesondere bevorzugt ist das Grundgerüst ausgewählt aus elektronenreichen Systemen wie Pyridin und fünfgliedrigen Heteroaromaten wie Pyrrol, Furan, Pyrazol, Imidazol, Thiophen. Das Grundgerüst kann an einer, mehreren oder allen substituierbaren Positionen des Grundgerüsts substituiert sein. Geeignete Substituenten sind dieselben, die bereits bezüglich der Arylgruppen genannt wurden.

Unter einem Alkylrest oder einer Alkylgruppe ist ein Rest mit 1 bis 20 Kohlenstoffatomen, bevorzugt 1 bis 10 Kohlenstoffatomen, besonders bevorzugt 1 bis 8 Kohlenstoffatomen zu verstehen. Dieser Alkylrest kann verzweigt oder unverzweigt sein und gegebenenfalls mit einem oder mehreren Heteroatomen, bevorzugt Si, N, O oder S, besonders bevorzugt N, O oder S, unterbrochen sein. Des Weiteren kann dieser Alkylrest mit einem oder mehreren der bezüglich der Arylgruppen genannten Substituenten substituiert sein. Es ist ebenfalls möglich, dass der Alkylrest eine oder mehrere Arylgruppen trägt. Dabei sind alle der vorstehend aufgeführten Arylgruppen geeignet. Besonders bevorzugt sind die Alkylreste ausgewählt aus der Gruppe bestehend aus Methyl und iso-Propyl.

Unter einem Alkenylrest oder einer Alkenylgruppe ist ein Rest zu verstehen, der den vorstehend genannten Alkylresten mit mindestens zwei Kohlenstoffatomen entspricht, mit dem Unterschied, dass mindestens eine C-C-Einfachbindung des Alkylrests durch eine C-C-Doppelbindung ersetzt ist. Bevorzugt weist der Alkenylrest eine oder zwei Doppelbindungen auf.

Unter einem Alkinylrest oder einer Alkinylgruppe ist ein Rest zu verstehen, der den vorstehend genannten Alkylresten mit mindestens zwei Kohlenstoffatomen entspricht, mit dem Unterschied, dass mindestens eine C-C-Einfachbindung des Alkylrests durch eine C-C-Dreifachbindung ersetzt ist. Bevorzugt weist der Alkinylrest eine oder zwei Dreifachbindungen auf.

Die Begriffe Alkylen, Arylen, Heteroarylen, Alkinylen und Alkenylen haben im Sinne der vorliegenden Anmeldung die bezüglich der Alkyl-, Aryl-, Heteroaryl-, Alkinyl- und Alkenylreste genannten Bedeutungen mit dem Unterschied, dass die Alkylen-, Arylen-, Heteroarylen-, Alkinylen- und Alkenylengruppen zwei Bindungssteilen zu Atomen des Liganden der Formel II aufweisen.

Unter einer Gruppe oder einem Substituenten mit Donor- oder Akzeptorwirkung sind im Sinne der vorliegenden Anmeldung die folgenden Gruppen zu verstehen: Unter Gruppen mit Donorwirkung sind Gruppen zu verstehen, die einen +I- und/oder +M-Effekt aufweisen, und unter Gruppen mit Akzeptorwirkung sind Gruppen zu verstehen, die einen -I- und/oder -M-Effekt aufweisen. Geeignete Gruppen, mit Donor- oder Akzeptorwirkung sind Halogenreste, bevorzugt F, Cl, Br, besonders bevorzugt F, Alkoxyreste, Aryloxyreste, Carbonylreste, Esterreste, sowohl Oxycarbonyl als auch Carbonyloxy, Aminreste, Amidreste, CH₂F-Gruppen, CHF₂-Gruppen, CH₂F-Gruppen, CF₃-Gruppen, CN-Gruppen, Thiogruppen, Sulfonsäuregruppen, Sulfonsäureestergruppen, Boronsäuregruppen, Boronsäureestergruppen, Phosphonsäuregruppen, Phosphonsäureestergruppen, Phosphinreste, Sulfoxidreste, Sulfonylreste, Sulfidreste, Nitrogruppen, OCN, Boranreste, Silylgruppen, Stannatreste, Iminogruppen, Hydrazinreste, Hydrazonreste, Oximreste, Nitrosogruppen, Diazogruppen, Phosphinoxidgruppen, Hydroxygruppen oder SCN-Gruppen. Ganz besonders bevorzugt sind F, Cl, CN, Aryloxy und Alkoxy.

Der Carbenligand ist ausgewählt aus der Gruppe bestehend aus 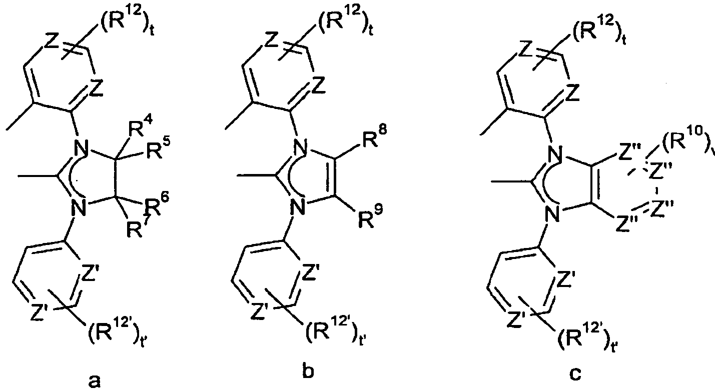 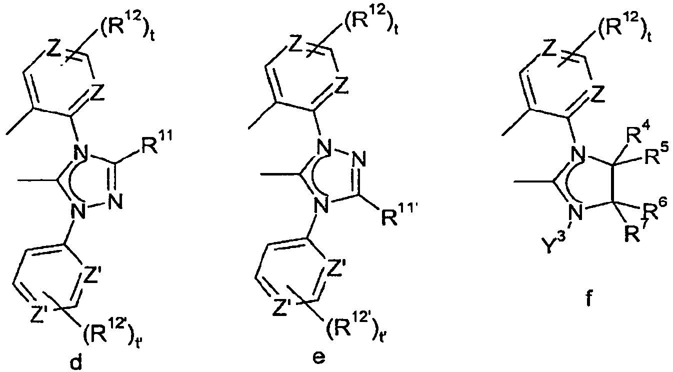 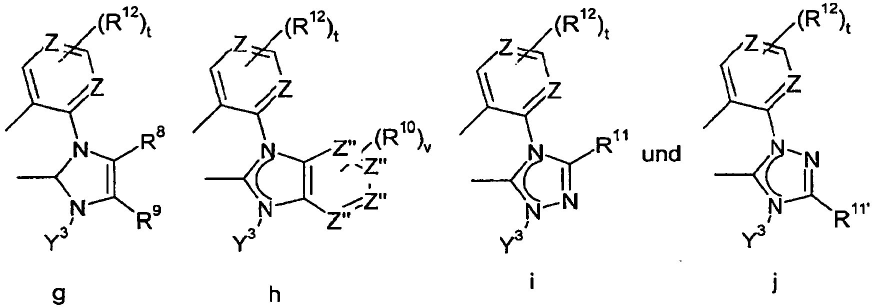 worin die Symbole die folgenden Bedeutungen aufweisen:
- Z, Z', Z": gleich oder verschieden CH oder N, wobei Im Falle von Z: 0 bis 2 der Symbole Z N bedeuten können, bevorzugt 0 oder 1, im Falle von Z': 0 bis 2 der Symbole Z' N bedeuten können, bevorzugt 0 oder 1,
im Falle von Z": 0 bis 4 der Symbole Z" N bedeuten können, bevorzugt 0 bis 3, besonders bevorzugt 0 bis 2, ganz besonders bevorzugt 0 oder 1;
- R¹², R^{12'}: gleich oder verschieden ein Alkyl-, Aryl-, Heteroaryl-, Alkinyl- oder Alkenylrest, bevorzugt ein Alkyl- oder Arylrest, oder jeweils 2 Reste R¹² bzw. R^{12'} bilden gemeinsam einen anellierten Ring, der gegebenenfalls mindestens ein Heteroatom, bevorzugt N, enthalten kann, bevorzugt bilden jeweils 2 Reste R¹² bzw. R^{12'} gemeinsam einen anellierten aromatischen C₆-Ring, wobei an diesen, bevorzugt sechsgliedrigen, aromatischen Ring gegebenenfalls ein oder mehrere weitere aromatische Ringe anelliert sein können, wobei jede denkbare Anellierung möglich ist, und die anellierten Reste wiederum substituiert sein können; oder R¹² bzw. R^{12'} bedeutet einen Rest mit Donor- oder Akzeptorwirkung;
- t und t': gleich oder verschieden 0 bis 4, wobei, wenn t bzw. t' > 1 ist, die Reste R¹² bzw. R^{12'} gleich oder verschieden sein können, bevorzugt ist t bzw. t' 0 oder 1, der Rest R¹² bzw. R^{12'} befindet sich, wenn t bzw. t' 1 ist, in ortho-, meta- oder para-Position zur Verknüpfungsstelle mit dem dem Carbenkohlenstoffatom benachbarten Stickstoffatom;
- R⁴, R⁵, R⁶,R⁷, R⁸, R⁹, R¹¹und R^{11'}: Wasserstoff, Alkyl, Aryl, Heteroaryl, Alkinyl oder Alkenyl oder ein Rest mit Donor- oder Akzeptorwirkung, bevorzugt Wasserstoff, Alkyl, Heteroaryl oder Aryl;
- R¹⁰: Alkyl, Aryl, Heteroaryl, Alkinyl oder Alkenyl, bevorzugt Alkyl, Heteroaryl oder Aryl, oder jeweils 2 Reste R¹⁰ bilden gemeinsam einen anellierten Ring, der gegebenenfalls mindestens ein Heteroatom, bevorzugt N, enthalten kann, bevorzugt bilden jeweils 2 Reste R¹⁰ gemeinsam einen anellierten aromatischen C₆-Ring, wobei an diesen, bevorzugt sechsgliedrigen, aromatischen Ring gegebenenfalls ein oder mehrere weitere aromatische Ringe anelliert sein können, wobei jede denkbare Anellierung möglich ist, und die anellierten Reste wiederum substituiert sein können; oder R¹⁰ bedeutet einen Rest mit Donor- oder Akzeptorwirkung;
weiterhin kann die Gruppe der Struktur 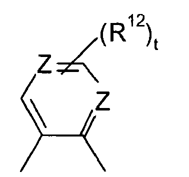 über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R⁸ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:
Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei

- x: 2 bis 10;
und
- R¹⁸, R¹⁹, R²⁰, R²¹, R²², R³⁰, R³¹: H, Alkyl, Aryl, Heteroaryl, Alkenyl, Alkinyl
bedeuten,
wobei in den Fällen, worin die Gruppe der Struktur 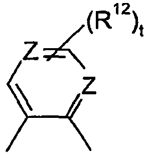 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
- v: 0 bis 4, bevorzugt 0, 1 oder 2, ganz besonders bevorzugt 0, wobei, wenn v 0 ist, die vier Kohlenstoffatome des Arylrests in Formel c und h, die gegebenenfalls mit R¹⁰ substituiert sind, Wasserstoffatome tragen;
- Y³: Wasserstoff, ein Alkyl-, Aryl-, Heteroaryl-, Alkinyl- oder Alkenylrest, bevorzugt ein Alkyl-, Heteroaryl- oder ein Arylrest, besonders bevorzugt ein Alkylrest.

Die mit Hilfe des erfindungsgemäßen Verfahrens hergestellten Übergangsmetall-Komplexe der Formel I können - wenn ein Metallatom M¹ mit der Koordinationszahl 6 eingesetzt wird - als faciales oder meridionales Isomer oder Isomerengemisch aus facialem und meridionalem Isomer in beliebigen Mengenverhältnissen vorliegen, wenn sie eine Zusammensetzung MA₃B₃ - wie vorstehend ausgeführt - aufweisen. Beispielsweise sind faciale und meridionale Isomere des Übergangsmetallkomplexes der Formel I möglich, wenn n 3 bedeutet und m und o 0 bedeuten. Für den Falle, dass die Übergangsmetall-Komplexe der Formel I eine Zusammensetzung MA₂B₄ aufweisen, können die Übergangsmetallkomplexe in Form von cis/trans Isomeren in beliebigen Mengenverhältnissen vorliegen, wie vorstehend ausgeführt. Cis/trans-Isomere von Komplexen der Formel I sind zum Beispiel möglich, wenn M¹ ein Metallatom mit der Koordinationszahl 6 ist und wenn n 2 bedeutet und m 2 bedeutet, wobei die beiden monodentaten Liganden L gleich sind, und o 0 ist.

Für neutrale Übergangsmetallkomplexe, worin das Übergangsmetallatom Ir(III) eine Koordinationszahl von 6 hat, ist die Zahl der bevorzugten monoanionischen bidentaten Carbenliganden n mindestens 1 und maximal 3. Bevorzugt ist die Zahl der bevorzugt eingesetzten monanionischen bidentaten Carbenliganden 2 oder 3, besonders bevorzugt 3. Dabei können die Carbenliganden bei n > 1 gleich oder verschieden sein.

Die Übergangsmetall-Komplexe der Formel I können - wenn ein Metallatom M¹ mit der Koordinationszahl 4 eingesetzt wird, das quadratisch planare Komplexe bildet - als cis- oder trans-Isomere oder als Isomerengemisch aus cis- oder trans-Isomeren in beliebigen Mengenverhältnissen vorliegen, wenn sie eine Zusammensetzung MA₂B₂ - wie vorstehend ausgeführt - aufweisen. Beispielsweise sind cis/trans-Isomere der Übergangsmetall-Komplexe der Formel I möglich, wenn n 2 bedeutet und m und o 0 bedeuten.

Für neutrale Übergansmetallkomplexe, worin das Übergangsmetallatom Pt(II) eine Koordinationszahl von 4 hat, ist die Zahl n der bevorzugten monoanionischen bidentaten Carbenliganden n 1 oder 2, bevorzugt 1. Dabei können die Carbenliganden bei n = 2 gleich oder verschieden sein.

Ganz besonders bevorzugt wird mit Hilfe des erfindungsgemäßen Verfahrens ein Übergangsmetallkomplex hergestellt, worin M¹ Ir(III) ist, das eine Koordinationszahl von 6 aufweist. Ganz besonders bevorzugt ist n in diesem Ir(III)-Komplex 3 und m 0.

Die cyclometallierten Carbenkomplexe der Formel I werden erfindungsgemäß hergestellt durch Umsetzung eines Ligandvorläufers ausgewählt aus der Gruppe bestehend aus 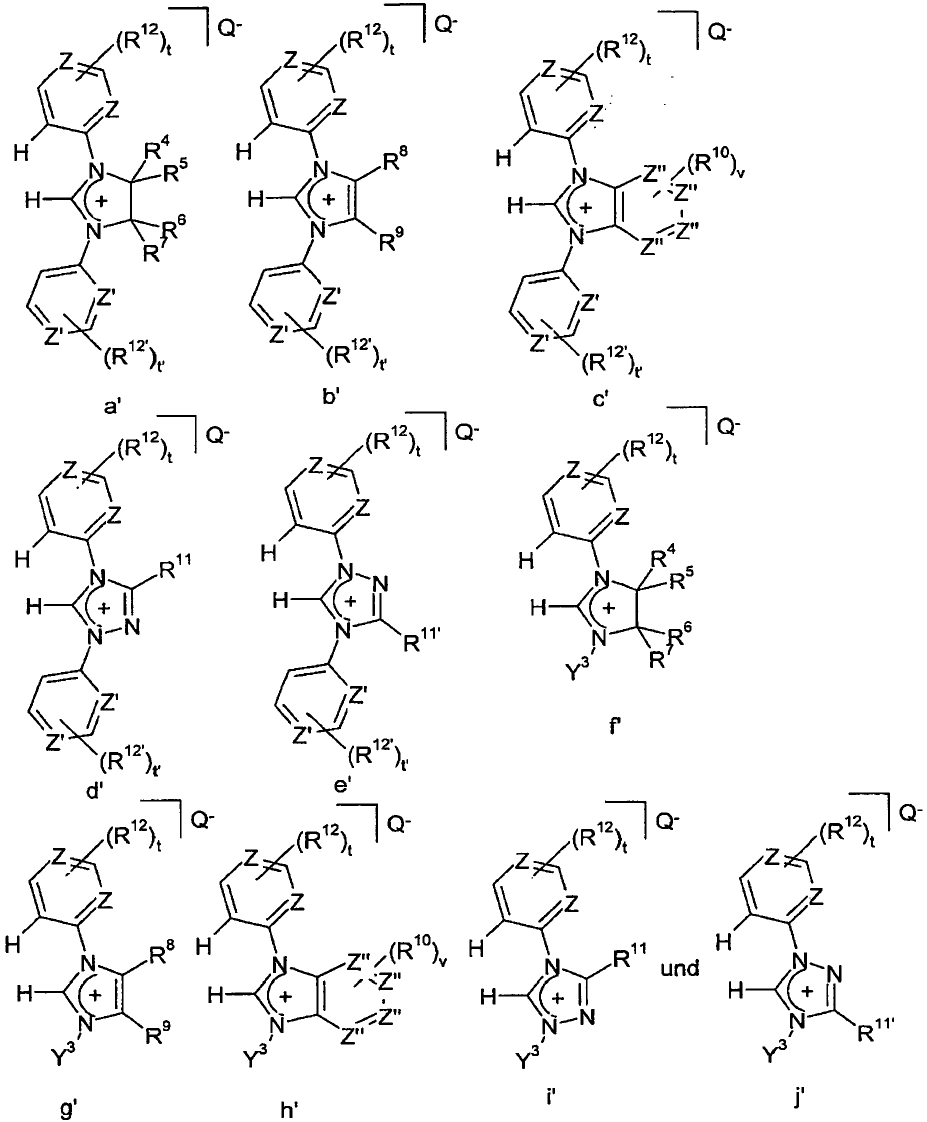 worin
- Q⁻: ein monoanionisches Gegenion, bevorzugt Halogenid, z.B. F⁻, Cl⁻, Br⁻, I⁻, Pseudohalogenid, BF₄⁻, BPh₄⁻, PF₆⁻, AsF₆⁻ oder SbF₆⁻, besonders bevorzugt Halogenid, z.B. F⁻, Cl⁻, Br⁻, I⁻, oder BF₄⁻, ganz besonders bevorzugt I⁻ oder BF₄⁻;
bedeutet, und
die weiteren Symbole in dem Ligandvorläufer die bezüglich dem Liganden der Formel II genannten Bedeutungen aufweisen, erhalten,
wobei
die Umsetzung den Einsatz einer Base und eines Hilfsreagenzes ausgewählt aus Salzen des Ag (Weg A) umfasst, wobei der Ligandvorläufer
(A) mit der Base, einem Metallkomplex enthaltend mindestens ein Metall M¹ und dem Hilfsreagenz umgesetzt wird (Weg A).

Die Herstellung der Ligandvorläufer erfolgt nach dem Fachmann bekannten Verfahren. Geeignete Verfahren sind z.B. in WO 2005/019373 und der darin zitierten Literatur, z.B. Organic Letters, 1999, 1, 953-956; Angewandte Chemie, 2000, 112, 1672-1674 genannt. Weitere geeignete Verfahren sind z.B. in T. Weskamp et al., J. Organometal. Chem. 2000, 600, 12-22; G. Xu et al., Org. Lett. 2005, 7, 4605-4608 ; V. Lavallo et al., Angew. Chem. Int. Ed. 2005, 44, 5705-5709 genannt. Einige der geeigneten Ligandvorläufer sind kommerziell erhältlich.

Gemäß dem erfindungsgemäßen Verfahren erfolgt die Umsetzung des Ligandvorläufers in Anwesenheit einer Base und eines Hilfsreagenzes (Weg A). Es wurde gefunden, dass mit Hilfe des erfindungsgemäßen Verfahrens cyclometallierte Metallkomplexxe der Formel I in guten Ausbeuten erhältlich sind.

In einer bevorzugten Ausführungsform des erfindungsgemäßen Verfahrens, werden der Metallkomplex enthaltend mindestens ein Metall M¹, der Ligandvorläufer, die Base und das Hilfsreagenz (Weg A) in bestimmten Verhältnissen zueinander eingesetzt.

Bezüglich Weg A des erfindungsgemäßen Verfahrens beträgt das Verhältnis von Metallkomplex enthaltend mindestens ein Metall M¹, Ligandvorläufer, Base und Hilfsreagenz bevorzugt 1 : 1-10 : 1-10 : 0,5-15 pro Metallatom M¹ und Zahl der Carbenliganden n, besonders bevorzugt 1 : 1-5 : 1-5 : 1-7, ganz besonders bevorzugt 1 : 1-2 : 1-2: 1 - 1,5.

Im Allgemeinen wird das erfindungsgemäße Verfahren in einem Lösungsmittel durchgeführt. Dabei sind unter dem Begriff Lösungsmittel sowohl einzelne Lösungsmittel als auch Lösungsmittelgemische zu verstehen. Bevorzugt werden aprotische Lösungsmittel eingesetzt. Besonders bevorzugt ist das Lösungsmittel ausgewählt aus mindestens einem Lösungsmittel ausgewählt aus der Gruppe bestehend aus Dioxan, Butanon, THF, Toluol, Xylol, DMF, Acetonitril, DMSO, NMP und Pyridin. Ganz besonders bevorzugt wird ein Lösungsmittel eingesetzt, das Dioxan als einziges Lösungsmittel oder im Gemisch mit einem der vorstehend genannten Lösungsmittel enthält. Überraschenderweise wurde gefunden, dass bei einer Durchführung des erfindungsgemäßen Verfahrens in einem Lösungsmittel enthaltend Dioxan besonders gute Ausbeuten erzielt werden können.

Das erfindungsgemäße Verfahren wird im Allgemeinen bei Temperaturen von 60 bis 200°C, bevorzugt 70 bis 150°C durchgeführt.

Bei dem Metallkomplex enthaltend mindestens ein Metall M¹ handelt es sich um einen Metallkomplex enthaltend mindestens ein Metall ausgewählt aus der Gruppe bestehend aus Ir, Co, Rh, Ni, Pd, Pt, Fe, Ru, Os, Cr, Mo, W, Mn, Tc, Re, Cu und Au, bevorzugt Ir, Os, Ru, Rh, Pd, Co und Pt, besonders bevorzugt Ir, Pt, Rh und Os, ganz besonders bevorzugt Ir, in jeder für das entsprechende Metallatom möglichen Oxidationsstufe, bevorzugt Ir(I) oder Ir(III), besonders bevorzugt Ir(I). Geeignete Metallkomplexe sind dem Fachmann bekannt. Beispiele für geeignete Metallkomplexe sind Pt(cod)Cl₂, Pt(cod)Me₂, Pt(acac)₂, Pt(PPh₃)₂Cl₂, PtCI₂, [Rh(cod)Cl]₂, Rh(acac)CO(PPh₃), Rh(acac)(CO)₂, Rh(cod)₂BF₄, RhCl(PPh₃)₃, RhCl₃ x n H₂O, Rh(acac)₃, [Os(CO)₃I₂]₂, [Os₃(CO)₁₂], OsH₄(PPH₃)₃, CP₂OS, Cp*₂OS, H₂OsCl₆ x 6H₂O, OsCl₃ x H₂O sowie [(µ-CI)Ir(η⁴-1,5-cod)]₂, [(µ-Cl)Ir(η²-coe)₂]₂, Ir(acac)₃, IrCl₃ x n H₂O, (tht)₃IrCl₃, Ir(η³-Allyl)₃, Ir(η³-Methallyl)₃, worin cod Cyclooctadien, coe Cycloocten, acac Acetylacetonat und tht Tetrahydrothiophen bedeuten. Die Metallkomplexe können gemäß dem Fachmann bekannten Verfahren hergestellt werden bzw. sind kommerziell erhältlich.

Bei der Herstellung von Iridium(III)-Komplexen der allgemeinen Formel I (M¹ in Formel 1 ist Ir), die gemäß der vorliegenden Anmeldung besonders bevorzugt sind, können beispielsweise Iridium(I)- oder (III)-Komplexe eingesetzt werden, insbesondere [(µ-Cl)Ir(η⁴-1,5-cod)]₂, [(µ-Cl)Ir(η²-coe)₂]₂, Ir(acac)₃, IrCl₃ x n H₂O, (tht)₃IrCl₃, Ir(η³-Allyl)₃, Ir(η³-Methallyl)₃, worin cod Cyclooctadien, coe Cycloocten, acac Acetylacetonat und tht Tetrahydrothiophen bedeuten. Besonders bevorzugt werden Ir(I)-Komplexe eingesetzt, ganz besonders bevorzugt [(µ-Cl)Ir(η⁴-1,5-cod)]₂ oder [(µ-Cl)Ir(η²-coe)₂]₂.

Das in dem erfindungsgemäßen Verfahren gemäß Weg A eingesetzte Hilfsreagenz enthält als Metall.

### Weg A

Das erfindungsgemäße Verfahren umfasst gemäß Weg A die Umsetzung der Ligandvorläufer mit einer Base, einem Metallkomplex enthaltend mindestens ein Metall M¹ und einem Hilfsreagenz ausgewählt aus Salzen des Ag.

Geeignete Verhältnisse von Metallkomplex enthaltend mindestens ein Metall M¹, Ligandvorläufer, Base und Hilfsreagenz, geeignete Lösungsmittel, geeignete Reaktionstemperaturen sowie geeignete Metallkomplexe enthaltend mindestens ein Metall M¹ wurden bereits vorstehend genannt.

Geeignete gemäß Weg A eingesetzte Hilfsreagenzien sind ausgewählt aus Salzen der vorstehend genannten Metalle (Ag). Geeignete Salze sind anorganische Salze wie die Tetrafluoroborate, Hexafluorophosphate, Hexafluoroborate, Hexafluoroantimonate, Hexafluoroarsenate, Thiocyanate, Cyanate, Nitrate, Sulfate oder Perchlorate der vorstehend genannten Metalle oder organische Salze wie die Trifluoroacetate oder Triflate der vorstehend genannten Metalle. Dabei können die genannten Hilfsreagenzien einzeln oder in Form von Mischungen zweier oder mehrerer Hilfsreagenzien eingesetzt werden.

Bevorzugte in Weg A eingesetzte Hilfsreagenzien sind Ag(I)-Salze. Geeignete Ag(I)-Salze sind z.B. ausgewählt aus anorganischen Salzen wie AgBF₄, AgPF₆, AgSbF₆, AgAsF₆, AgSCN, AgOCN, AgNO₃, Ag₂SO₄, AgClO₄ und organischen Salzen wie Ag(COOCF₃), Ag(OTf). Ganz besonders bevorzugt sind AgBF₄ und AgPF₆⁻.

Als Base wird in Weg A des erfindungsgemäßen Verfahrens bevorzugt eine Base eingesetzt ausgewählt aus Alkalimetall-Silylamiden, Alkalimetall-Alkoholaten, Alkalimetall-Hydriden, Alkalimetall-Acetaten, Alkalimetall-Hydroxiden, Alkalimetall-Carbonaten, Grignard-Verbinungen, Alkylmetallverbindungen und Stickstoff haltigen Basen. Dabei können die genannten Hilfsreagenzien einzeln oder in Form von Mischungen zweier oder mehrerer Hilfsreagenzien eingesetzt werden. Besonders bevorzugt werden eine oder mehrere Basen ausgewählt aus der Gruppe bestehend aus KHMDS, NaHMDS, LiHMDS, KO^{t}Bu, NaO^{t}Bu, LiO^{t}Bu, NaH, KOAc, NaOAc, LiOAc, NEt₃, BuLi, RMgHal, wobei R Alkyl, Aryl, Alkenyl bedeutet, KOH, NaOH, LiOH, Cs₂CO₃, K₂CO₃, Na ₂CO₃, Li₂CO₃, Pyridin und DBU eingesetzt. Ganz besonders bevorzugt werden KHMDS, NaHMDS und/oder LiHMDS als Base eingesetzt.

Die Reaktionsdauer gemäß Weg A beträgt im Allgemeinen 1 bis 100 h, bevorzugt 1 bis 48 h.

Die Umsetzung gemäß Weg A kann einstufig oder mehrstufig erfolgen.

Die einstufige Umsetzung erfolgt im Allgemeinen in der Weise, dass der Ligandvorläufer, die Base, der Metallkomplex enthaltend mindestens ein Metall M¹ und das Hilfsreagenz in einem Lösungsmittel zusammen gegeben werden und anschließend auf die vorstehend genannte Reaktionstemperatur erwärmt werden. Nach der vorstehend angegebenen Reaktionsdauer wird das Lösungsmittel im Allgemeinen gemäß den Fachmann bekannten Verfahren, üblicherweise im Vakuum, entfernt und der verbleibende Rückstand wird gemäß dem Fachmann bekannten Verfahren aufgearbeitet und/oder gereinigt. Üblicherweise erfolgen die Aufarbeitung und Reinigung durch Extraktion, Säulenchromatographie und/oder Umkristallisation gemäß dem Fachmann bekannten Verfahren.

Bei einer mehrstufigen Umsetzung sind alle dem Fachmann bekannten Zugabereihenfolgen möglich. In einer bevorzugten Ausführungsform erfolgt die mehrstufige Umsetzung gemäß den folgenden Schritten:
(i) Umsetzung des Ligandvorläufers mit der Base, wobei ein Reaktionsgemisch erhalten wird,
(ii) Umsetzung des Metallkomplexes enthaltend mindestens ein Metall M¹ mit dem Hilfsreagenz, wobei ein Reaktionsgemisch erhalten wird,
(iii) Umsetzung des in Schritt (i) erhaltenen Reaktionsgemisches mit dem in Schritt (ii) erhaltenen Reaktionsgemisch,
wobei ein cyclometallierter Metallkomplex der Formel I erhalten wird.

Die Umsetzung erfolgt bevorzugt in einem der vorstehend genannten Lösungsmittel oder Lösungsmittelgemische. Geeignete Ligandvorläufer, Basen, Metallkomplexe enthaltend mindestens ein Metall M¹ und Hilfsreagenzien wurden bereits vorstehend genannt.

### Schritt (iA)

Die Umsetzung in Schritt (iA) erfolgt bevorzugt bei Raumtemperatur in einem der vorstehend genannten Lösungsmittel oder Lösungsmittelgemische. Im Allgemeinen wird der Ligandvorläufer mit der Base versetzt, und die erhaltene Reaktionsmischung wird bei Raumtemperatur gerührt.

### Schritt (iiA)

Die Umsetzung in Schritt (iiA) erfolgt im Allgemeinen ebenfalls bei Raumtemperatur. Im Allgemeinen werden der Metallkomplex enthaltend mindestens ein Metall M¹ und das Hilfsreagenz einem in der vorstehend genannten Lösungsmittel oder Lösungsmittelgemische gemischt, und die Mischung wird bei Raumtemperatur gerührt.

### Schritt (iiiA)

In Schritt (iiiA) erfolgt die Zugabe der in Schritt (iA) erhaltenen Reaktionsmischung zu der in Schritt (iiA) erhaltenen Reaktionsmischung. Grundsätzlich ist es ebenfalls möglich, die in Schritt (iiA) erhaltene Reaktionsmischung zu der in Schritt (iA) erhaltenen Reaktionsmischung zu geben. Im Allgemeinen erfolgt die Zugabe bei Raumtemperatur, und anschließend wird auf die vorstehend genannten Reaktionstemperaturen erwärmt.

Nach der vorstehend angegebenen Reaktionsdauer wird das Lösungsmittel im Allgemeinen gemäß dem Fachmann bekannten Verfahren, bevorzugt im Vakuum, entfernt. Anschließend wird das Reaktionsprodukt wie vorstehend bezüglich des einstufigen Verfahrens erwähnt aufgearbeitet und/oder gereinigt.

Das jeweilige nach den Schritten (iA) bzw. (iiA) erhaltene Reaktionsprodukt kann direkt - ohne Aufarbeitung - eingesetzt werden oder aufgearbeitet werden. Im Allgemeinen erfolgt keine Aufarbeitung und das jeweilige erhaltene Reaktionsprodukt wird direkt in Schritt (iiiA) eingesetzt.

Mit Hilfe des erfindungsgemäßen Verfahrens gemäß Weg A umfassend den Einsatz einer Base und eines Hilfsreagenzes können die gewünschten cyclometallierten Carbenkomplexe der Formel I in guten Ausbeuten und in hoher Reinheit erhalten werden.

Ein weiterer Gegenstand der vorliegenden Erfindung ist die Verwendung eines Hilfsreagenzes ausgewählt aus Salzen enthaltend Ag gemeinsam mit einer Base in einem Verfahren zur Herstellung von cyclometallierten Carbenkomplexen.

Bevorzugte Hilfsreagenzien und Basen sowie ein bevorzugtes Verfahren zur Herstellung der cyclometallierten Carbenkomplexe sind vorstehend genannt.

Wird das erfindungsgemäße Verfahren gemäß Schritt A zur Herstellung von cyclometallierten Carbenkomplexen der Formel I eingesetzt, die cis/trans-Isomere oder fac-mer-Isomere (facial/meridional-Isomere) bilden können, wird gemäß dem erfindungsgemäßen Verfahren im allgemeinen eine Mischung der cis/trans-Isomere oder fac-mer-Isomere (facial/meridional-Isomere) erhalten. Diese Isomermischungen können gemäß dem Fachmann bekannten Verfahren getrennt werden, so dass jeweils die reinen cis- oder trans-Isomere bzw. fac- oder mer-Isomere erhältlich sind.

Die nachfolgenden Beispiele erläutern die Erfindung zusätzlich.

### Beispiele

### Methode A zur Komplexsynthese:

Eine Suspension von (Benz-)Imidazolium-Salz (5 eq) in Dioxan wird unter Argon innerhalb von 30 min mit Kalium-bis(trimethylsilyl)amid (0.5 M in Toluol; 5 eq) versetzt. Man rührt eine Stunde bei Raumtemperatur bevor man das Gemisch innerhalb von 30 min unter Argon zu einer Suspension von 1,5-Cyclooctadien-iridium(I)chlorid-Dimer (0.5 eq) und AgBF₄ (1 eq) in Dioxan gibt. Anschließend wird das Reaktionsgemisch eine Stunde bei Raumtemperatur, zwei Stunden bei 70°C und 22 Stunden unter Rückfluss gerührt.

### Beispiel 1 Synthese von Ir(cn-pmic)₃

### Synthese von 1-(4-Cyanophenyl)imidazol

Unter Stickstoff-Überleitung werden 1500 mL trockenes Dimethylformamid (DMF) in einem 1000-mL-Vierhalskolben vorgelegt und 72.67 g (0.6 mol) 4-Fluor-cyanobenzol und 61.2 g (0.9 mol) Imidazol sowie zuletzt 21.6 g (0.9 mol) Natriumhydrid zugegeben. Die Reaktionsmischung wird auf 100°C erhitzt, 4 Stunden bei dieser Temperatur und anschließend über Nacht bei Raumtemperatur gerührt. Das Reaktionsgemisch wird danach auf Wasser gegossen und das resultierende Gemisch mit Dichlormethan mehrfach extrahiert. Die organische Phase wird getrocknet, am Rotationsverdampfer eingeengt und schließlich im Vakuum bei 60 °C nachgetrocknet. Die Ausbeute beträgt 94g (93% d.Th.).
¹H-NMR (400 MHz, CDCl₃): δ = 7.27 (s, 1 H); 7.35 (s, 1 H); 7.54 (d, J = 8.8 Hz, 2 H); 7.81 (d, J = 8.8 Hz, 2 H); 7.95 (s, 1 H).

### Synthese von 1-(4-Cyanophenyl)-3-methylimidazoliumiodid

56 g (0.33 mol) 1-(4-Cyanophenyl)imidazol werden in einem 2000-mL-Einhalskolben mit Kühler in 560 mL wassersfreiem Tetrahydrofuran gelöst, mit 234.2 g (1.65 mol) Methyliodid versetzt, kurz durchgerührt und ohne weiteres Rühren 48 Stunden stehengelassen. Der feste Kolbeninhalt wird anschließend mit Ethanol aufgeschlämmt, abgesaugt und mit Ethanol nachgewaschen bis der Ablauf praktisch farblos ist. Der Rückstand wird bei 70°C im Vakuum getrocknet. Die Ausbeute beträgt 81.54g (80% d.Th.).

¹H-NMR (400 MHz, DMSO): δ = 3.97 (s, 3 H); 8.00-8.04 (m, 3 H); 8.22 (d, J = 9.0 Hz, 2 H); 8.40 (dd, J = 1.8, 1.8 Hz, 1 H); 9.91 (s, 1 H). Elementaranalyse: berechnet für C₁₁H₁₀IN₃: C 42.4, H 3.3, N 13.5, I 40.0, gefunden: C 42.6, H 2.9, N 13.6,I 40.9.

### Synthese von mer-Tris-[1-(4'-cyanophenyl)-3-methylimidazol-2-yliden-C²,C²]-iridium(III)

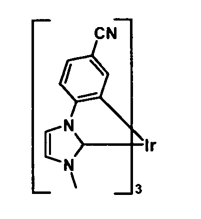

### Synthesevorschrift 1:

Das Produkt wird nach Methode A hergestellt. Das Lösungsmittel wird im Vakuum entfernt und der verbleibende Rückstand wird mit Methylenchlorid extrahiert. Aus dem Extrakt erhält man nach säulenchromatographischer Aufreinigung das Produkt als gelbliches Pulver (58% d.Th.).

### Vergleichsbeispiel 1:

### Synthesevorschrift 2:

In einem 500-ml-Dreihalskolben werden 10 g (32 mmol) des Imidazoliumiodids in 150 mL Dioxan vorgelegt und bei Raumtemperatur innerhalb von 30 Minuten 64.3 mL Kalium-bis(trimethylsilyl)amid (0.5 M in Toluol, 32 mmol) zugesetzt. Man rührt eine Stunde bei Raumtemperatur bevor man das Gemisch innerhalb von 30 min unter Argon zu einer Suspension von 2.16 g (3.2mmol) 1,5-Cyclooctadien-iridium(I)chlorid-Dimer in 200 mL Dioxan gibt. Die Reaktionsmischung wird eine Stunde bei Raumtemperatur gerührt, zwei Stunden bei 70 °C und 22 Stunden unter Rückfluss. Der Ansatz wird anschließend bis zur Trockene eingeengt und der Rückstand mit Methylenchlorid extrahiert. Aus dem Extrakt erhält man nach säulenchromatographischer Aufreinigung das Produkt als gelbliches Pulver (24% d.Th.).

Die Ausbeute an dem gewünschten Produkt ist in Vergleichsbeispiel 1 deutlich geringer als in Beispiel 1 (Synthesevorschrift 1) gemäß dem erfindungsgemäßen Verfahren.

¹H-NMR (CD₂CI₂, 400 MHz): δ = 2.97 (s, 3H), 3.05 (s, 6H), 6.77 (d, J 2.0, 1 H), 6.85 (d, J 2.0, 1 H), 6.88 (d, J 2.5, 1 H), 6.89 (d, J 2.0, 1 H), 6.98-7.00 (m, 1 H), 7.04-7.05 (m, 1 H), 7.21-7.30 (m, 6H), 7.46 (d, J 2.0, 1 H), 7.52 (d, J 2.0, 1 H), 7.53 (d, J 2.0, 1 H).

### Beispiel 2 Synthese von Ir(cn-pmbic)₃

### Synthese von 1-(4-Cyanophenyl)benzimidazol (K. Nishiura, Y. Urawa, S. Soda, Adv. Synth. Catal. 2004, 346, 1679)

Natriumhydrid (60%ig in Mineralöl; 24.0 g 0.60 mol) wird in einem Kolben vorgelegt und mit N,N-Dimethylformamid (80 ml) versetzt. Zu dieser Suspension wird über 1 h eine Lösung aus Benzimidazol (73.3 g, 0.60 mol) in N,N-Dimethylformamid (250 ml) zugetropft. Nach beendeter H₂-Entwicklung wird 4-Chlorbenzonitril (55.6 g, 0.40 mol) zugegeben und anschließend 10.5 h auf 130 °C erwärmt. Nach Abkühlen auf RT wird das Reaktionsgemisch auf Wasser (4 L) gegeben und der gebildete Rückstand abgesaugt, mit Wasser gewaschen und im Vakuum getrocknet. Es werden 90.6 g 1-(4-cyanophenyl)benzimidazol erhalten, das noch Verunreinigungen an Mineralöl enthält.
¹H-NMR (400 MHz, CD₂Cl₂): δ = 7.35-7.41 (m, 2 H), 7.59-7.63 (m, 1 H), 7.70 (d, J = 8.5 Hz, 2 H), 7.83-7.86 (m, 1 H), 7.90 (d, J = 8.5 Hz, 2 H), 8.15 (s, 1 H).

### Synthese von 1-(4-Cyanophenyl)-3-methyl-benzimidazoliumiodid

1-(4-Cyanophenyl)benzimidazol (90 g, leicht verunreinigt durch Mineralöl) wird in THF (250 ml) vorgelegt, mit Methyliodid (116 g, 0.82 mol) versetzt und 25.5 h bei 40 °C belassen. Der gebildete Rückstand wird abfiltriert, mit Ethanol gewaschen und im Vakuum getrocknet. Es werden 123 g 1-(4-cyanophenyl)-3-methyl-benzimidazoliumiodid erhalten.
¹H-NMR (400 MHz, DMSO): δ = 4.20 (s, 3 H), 7.74-7.84 (m, 2 H), 7.93 (d, J = 8.4 Hz, 1 H), 8.07 (d, J = 8.8 Hz, 2 H), 8.18 (d, J = 8.4 Hz, 1 H), 8.30 (d, J = 8.8 Hz, 2 H), 10.24 (s, 1 H).

### Synthese von mer-Tris-[1-(4'-cyanophenyl)-3-methylbenzimidazol-2-yliden-C²,C^{2'}]-iridium(III)

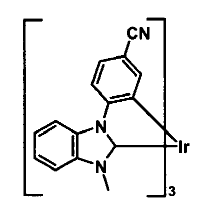

### Synthesevorschrift 1:

Das Produkt wird nach Methode A hergestellt. Das Lösungsmittel wird im Vakuum entfernt und der verbleibende Rückstand wird mit Methylenchlorid extrahiert. Aus dem Extrakt erhält man nach säulenchromatographischer Aufreinigung das Produkt als gelbliches Pulver (60% d.Th.).
¹H-NMR (*d₆*-DMSO, 500 MHz): δ = 3.18 (s, 3H), 3.22 (s, 3H), 3.29 (s, 3H), 6.81 (d, J 2.0, 1 H), 7.03 (d, J 2.0, 1 H), 7.10 (d, J 2.0, 1 H), 7.30-7.47 (m, 12H), 7.94 (d, J 8.0, 1 H), 7.95 (d, J 3.5, 1 H), 7.97 (d, J 3.5, 1 H), 8.15 (d, J 8.0, 1 H), 8.16 (d, J 3.5, 1 H), 8.17 (d, J 3.5, 1H). ¹³C-NMR (CD₂CI₂, 125 MHz): δ = 187.0, 185.0, 183.7 (NCN), 153.4, 152.6, 151.8, 150.5, 149.7, 147.5 (Cq bzw. CN), 141.9, 141.7, 139.9 (CH_{Ph}), 137.10, 137.07, 136.7, 132.63 (2), 132.59 (Cq bzw. CN), 127.1, 127.0, 126.7, 124.3, 124.2 (2), 123.71, 123.66, 123.5, (CHₚₕ), 120.68, 120.66, 120.65 (Cq bzw. CN), 113.1, 112.9, 112.5, 112.2, 112.1, 111.9, 111.1, 110.9 (2) (CHₚₕ), 108.6, 108.3, 108.2 (Cq bzw. CN), 34.3, 34.2, 33.5 (NCH₃). Thermogravimetrie/Differentialthermoanalyse (Aufheizrate: 5K/min): Verlust von Lösungsmittel ab ca. 30 °C; Beginn der Zersetzung ca. 410°C. HPLC: > 99.8 FI% (Säule: Purospher Star Si 5 µm, Eluent : Heptan/*i*Propanol = 65/35 (Vol%)).

### Beispiel 3 Synthese von Ir(cl-pmic)₃

### Synthese von 1-(4-Chlorphenyl)imidazol (S. U. Son, I. K. Park, J. Park, T. Hyeon, Chem. Commun. 2004, 778)

1-Chlor-4-fluorbenzol (16.3 g, 124 mmol) und Imidazol (5.0 g, 73.4 mmol) werden in N,N-Dimethylformamid (30 mL) gelöst und unter Rühren mit Natriumhydrid (60%ig in Mineralöl; 3.82 g, 95.4 mmol) versetzt und darauf 5 h auf 130 °C erhitzt. Nach dem Abkühlen wird das Reaktionsgemisch langsam auf Wasser gegeben. Der gebildete Niederschlag wird anschließend abfiltriert, mit Petrolether gewaschen und anschließend im Vakuum getrocknet. Es werden 10.3 g 1-(4-Chlorphenyl)imidazol erhalten.
¹H-NMR: (400 MHz, CD₂Cl₂): δ = 7.16 (brs, 1 H), 7.30 (dd, J = 1.2, 1.2 Hz,1 H), 7.38 (d, J = 7.7 Hz, 2 H), 7.48 (d, J = 7.7 Hz, 2 H), 7.82 (brs, 1 H).

### Synthese von 1-(4-Chlorphenyl)-3-methyl-imidazoliumiodid

1-(4-Chlorphenyl)imidazol (0.37 g, 2.07 mmol) wird in THF (5 mL) gelöst und anschließend mit Methyliodid (1.47 g, 10.4 mmol) versetzt und für 20 h stehen gelassen. Der gebildete Niederschlag wird anschließend abfiltriert und mit Ethanol sowie mit Petrolether gewaschen und anschließend im Vakuum getrocknet. Es werden 0.46 g 1-(4-Chlorphenyl)-3-methyl-imidazoliumiodid erhalten.
¹H-NMR (400 MHz, DMSO): δ = 3.96 (s, 3 H), 7.76-7.84 (m, 4 H), 7.97 (dd, J = 1.8, 1.8 Hz, 1 H), 8.30 (dd, J = 1.8, 1.8 Hz, 1 H), 9.80 (brs, 1 H).

### Synthese von mer-Tris-[1-(4'-chlorphenyl)-3-methyiimidazol-2-yliden-C²,C^{2'}]-iridium(III)

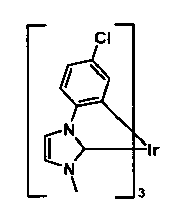

Das Produkt wird nach Methode A hergestellt. Nach dem Abkühlen wird der Niederschlag abfiltriert und das Filtrat einer säulenchromatographischen Aufreinigung unterzogen. Man erhält das Produkt als weißes Pulver (79% d.Th.).

¹H-NMR: (CD₂CI₂, 500 MHz): δ = 7.43 (m, 2H), 7.38 (m, 1 H), 7.08 (m, 3H), 6.90 - 6.75 (m, 6H), 6.67 (m, 2H), 6.42 (m, 1 H) (je CH_{Ph} bzw. NCHCHN), 3.06 (s, 3H, NCH₃), 3.02 (s, 3H, NCH₃), 2.99 (s, 3H, NCH₃). ¹³C-NMR (CD₂Cl₂, 125 MHz): δ = 173.9, 172.1, 171.3 (NCN), 153.9, 152.7, 151.2, 147.1, 146.4, 145.7 (Cq), 138.5, 138.1, 136.6 (CH_{Ph} bzw. NCHCHN), 130.5, 130.3, 130.2 (Cq), 121.8, 121.6, 121.3, 120.5, 120.3, 120.1, 115.04, 114.99, 114.9, 112.00, 111.97, 111.5 (CH_{Ph} bzw. NCHCHN), 37.4 (doppelte Intensität), 36.2 (NCH₃).

### Beispiel 4 Synthese von Ir(pombic)₃

### Synthese von 2-[(2,6-Dinitrophenyl)amino]-phenol

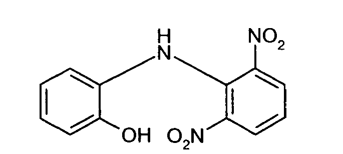

Die Herstellung erfolgt nach der Vorschrift von F. Ullmann, G. Engi, N. Wosnessenky, E. Kuhn und E. Herre, Liebigs Ann. 365 (1909) 79, 110.

Zu einer Lösung von 25.0 g (121 mmol) 98 %igem 2,6-Dinitrochlorbenzol in 185 ml wasserfreiem Ethanol werden unter Rühren und Stickstoff 17.30 g (157 mmol) 99 %iges 2-Aminophenol und 17.15 g (209 mmol) wasserfreies Natriumacetat gegeben. Die Reaktionslösung wird 2 Stunden lang unter Rückfluss zum Sieden erhitzt und anschließend auf Raumtemperatur gekühlt. Die rotvioletten Kristallnadeln werden über ein Schwarzbandfilter abgetrennt, mit Wasser bis zu einem farblosen Ablauf gewaschen und bei 50 °C im Vakuum getrocknet. Es werden 27.90 g (84 % d. Th.) schwarz glänzende Nadeln erhalten, die bei 189 - 192 °C (Lit.: 191 °C) schmelzen.

### Synthese von 4-Nitrophenoxazin

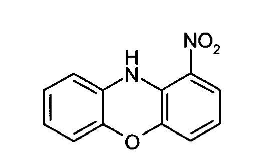

Die Herstellung erfolgt nach der Vorschrift von F. Ullmann, G. Engi, N. Wosnessenky, E. Kuhn und E. Herre, Liebigs Ann. 365 (1909) 79, 110.
27.70 g (101 mmol) 2-[(2,6-Dinitrophenyl)amino]-phenol werden in 666 ml 1 %iger NaOH 30 min lang unter Rückfluss und Rühren erhitzt. Nach dem Abkühlen auf Raumtemperatur wird der Feststoff abgesaugt, mit heißem Wasser neutral gewaschen und bei 80 °C im Vakuum getrocknet. Es werden 21.2 g (92 % d. Th.) schwarze Kristalle erhalten, die bei 168 - 171 °C (Lit.: 166 °C) schmelzen.

### Synthese von 1-Ammoniumphenoxazinchlorid

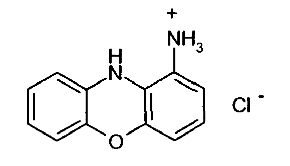

Die Herstellung erfolgt nach der Vorschrift von F. Kehrmann und L. Löwy, Ber. dtsch. chem. Ges. 44 (1911) 3006 - 3011.
21.20 g (92.9 mmol) 1-Nitrophenoxazin werden in 177 ml wasserfreiem Ethanol suspendiert und mit einer Lösung von 83.84 g (372 mmol) Zinn(II)-chlorid x 2 H₂O in 101 ml konz. HCI versetzt. Die Reaktionsmischung wird 1 Stunde lang unter Rückfluss zum Sieden erhitzt. Nach dem Abkühlen der Reaktionsmischung auf Raumtemperatur wird der Niederschlag abgesaugt, viermal mit insgesamt 430 ml 10 % HCI, dann mit kaltem Wasser gewaschen und bei 70 °C im Vakuum getrocknet. Es werden 18.45 g graue Nadeln erhalten.

### Synthese von 2,10b-Diaza-6-oxa-aceanthrylen (Imidazo[4,5,1-k,l]phenoxazin)

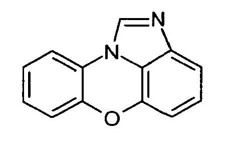

Die Herstellung erfolgt in Anlehnung an die Vorschriften von H. Shirai und T. Hayazaki, Yakugaku Zasshi 90 (1970) 588 - 593 und A. N. Gritsenko, Z. I. Ermakova, V. S. Troitskaya und S. V. Zhuravlev., Chem. Heterocycl. Compd. 1971, 715 - 717. 18.45g (78.6 mmol) 1-Ammoniumphenoxazinchlorid werden in 85 ml 85 %ige Ameisensäure suspendiert. Nach der Zugabe von 5.38 g (78.6 mmol) Natriumformiat wird die Reaktionsmischung 3.5 Stunden lang unter Rückfluss zum Sieden erhitzt. Nach dem Abkühlen auf Raumtemperatur wird die Reaktionsmischung in 700 g 10 % NaOH gefällt und noch 30 min nachgerührt. Der Feststoff wird über einen Schwarzbandfilter abgesaugt, mit Wasser gewaschen und bei 70 °C im Vakuum getrocknet. Das Rohprodukt (16.35 g) wird in 160 ml Methanol 2 Stunden lang gerührt, anschließend abgesaugt, mit Methanol gewaschen und bei 70 °C getrocknet. Es werden 13.09 g (80 % d. Th.) graue Nadeln erhalten, die bei 177 - 181 °C (Lit.: 177 - 178 °C) schmelzen.

Synthese von 10b-Aza-2-azonia-2-methyl-6-oxa-aceanthrylen-iodid (2-Methyl-imidazo-[4,5,1-k,l]phenoxazoniumiodid) 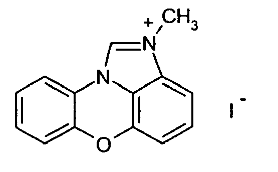 Die Herstellung erfolgt in Anlehnung an die Vorschrift von H. Shirai und T. Hayazaki, Yakugaku Zasshi 90 (1970) 588 - 593.

Eine Lösung von 5.48 g (26.3 mmol) 2,10b-Diaza-6-oxa-aceanthrylen und 18.42 g (130 mmol) Methyliodid in 75 ml Methylenchlorid werden 26 Stunden unter Rückfluss zum Sieden erhitzt. Nach dem Abkühlen der Reaktionsmischung auf Raumtemperatur wird der Feststoff abgesaugt, mit Methylenchlorid gewaschen und bei 75 °C im Vakuum getrocknet. Es werden 8.35 g (91 % d. Th.) analysenreine graue Mikrokristalle erhalten, die bei 284 - 291 °C (Lit.: 295 - 297 °C) schmelzen.

### Synthese von 10b-Aza-2-azonia-2-methyl-6-oxa-aceanthrylen-tetrafluoroborat (2-Methylimidazo[4,5,1-k,l]phenoxazoniumtetrafluoroborat)

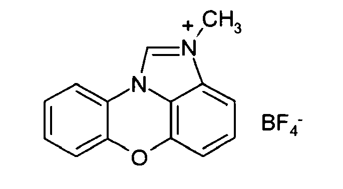

Zu einer im Eisbad auf 0 - 3 °C gekühlten Lösung aus 10.41 g (50.0 mmol) 2,10b-Diaza-6-oxa-aceanthrylen in 620 ml wasserfreiem Methylenchlorid werden 7.55 g (50.0 mmol) 98 %iges Trimethyloxoniumtetrafluoroborat gegeben. Man lässt die Reaktionsmischung auf Raumtemperatur erwärmen und über Nacht nachrühren. Es werden 0.755 g (5.0 mmol) 98 %iges Trimethyloxoniumtetrafluoroborat nachgegeben. Nach 4 stündigem Rühren bei Raumtemperatur wird der Niederschlag abgesaugt, mit Methylenchlorid gewaschen und bei 40 °C im Vakuum getrocknet (Rohausbeute: 11.35 g). Der Feststoff wird aus 1000 ml Methanol unter Stickstoff umkristallisiert. Es werden 8.90 g analysenreine dunkelgraue Mikrokristalle mit einem Schmp. von 230 - 238 °C erhalten. Das Filtrat wird zur Trockne eingeengt. Der Feststoff (3.39 g) wird aus 132 ml Methanol umkristallisiert. Es werden noch 1.42 g dunkelgraue Mikrokristalle erhalten, insgesamt also 10.32 g (67 % d. Th.).
¹H-NMR (500 MHz, DMSO): δ = 4.10 (s, 3 H), 7.18 (d, 1 H), 7.37-7.61 (m, 5H), 7.93 (d, 1 H), 10.25 (s, 1 H).

### Synthese von mer-Ir(pombic)₃

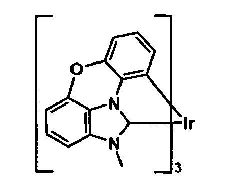

Das Produkt wird nach Methode A in o-Xylol als Lösungsmittel hergestellt. Nach dem Abkühlen wird der Niederschlag abfiltriert und das Filtrat einer säulenchromatographischen Aufreinigung unterzogen. Man erhält das Produkt als gelbliches Pulver (21% d.Th.).

¹H-NMR: (CD₂CI₂, 500 MHz): δ = 6.99 (m, 3H, CH_{PH}), 6.78 (m, 3H, CH_{Ph}), 6.63 (m, 8H, CH_{PH}), 6.52 (m, 3H, CH_{Ph}), 6.41 (m, 1H, CH_{PH}), 3.47 (s, 3H, CH₃), 3.45 (s, 3H, CH₃), 3.33 (s, 3H, CH₃). ¹³C-NMR (CD₂CI₂, 125 MHz): δ = 170.18, 168.16, 166.87 (NCN), 145.08, 144.61, 144.42, 144.34, 144.01, 143.49, 143.45, 143.44, 142.31, 136.29 (Cq), 136.25 (CH_{Ph}), 136.18, 135.98 (Cq), 135.79, 133.76 (CH_{Ph}), 131.92, 131.24, 130.51 (Cq), 126.61, 126.48, 126.43, 125.51, 125.34, 125.28 (CH_{Ph}), 124.03, 124.01, 123.92 (Cq), 109.86, 109.79, 109.47, 106.46, 106.32, 106.27, 105.50, 105.49, 105.46 (CH_{Ph}), 33.98, 33.64, 33.55 (CH₃).

### Beispiel 5 Synthese von Rh(cn-pmic)₃

### Synthese von mer-Tris-[1-(4'-cyanophenyl)-3-methyiimidazol-2-yliden-C²,C²]-rhodium(III)

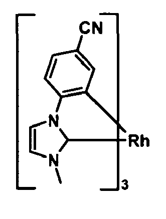

Das Produkt wird nach Methode A mit 1,5-Cyclooctadien-rhodium(I)chlorid-Dimer hergestellt. Das Lösungsmittel wird im Vakuum entfernt und der verbleibende Rückstand wird mit Methylenchlorid extrahiert. Aus dem Extrakt erhält man nach säulenchromatographischer Aufreinigung das Produkt als hellgelbes Pulver (21% d.Th.).

¹ H-N MR: (CD₂CI₂, 500 MHz): δ = 7.56 (d, J = 1.9 Hz, 1 H), 7.55 (d, J = 2.0 Hz, 1 H), 7.49 (d, J = 1.9 Hz, 1 H), 7.27-7.11 (m, 6H), 6.97, 6.93 (je s, 1 H), 6.89 (d, J = 1.8 Hz, 1 H), 6.86 (d, J = 1.7 Hz, 2H), 6.71 (s, 1 H), 3.03 (s, 6H, CH₃), 2.96 (s, 3H, CH₃).¹³C-NMR (CD₂Cl₂, 125 MHz): δ = 190.3 (d, ¹*J*_{C,Rh} = 38.4 Hz, NCN), 189.5 (d, ¹*J*_{C,Rh} = 38.1 Hz, NCN), 188.2 (d, ¹*J*_{C,Rh} = 38.3 Hz, NCN), 166.7 (d, ¹*J*_{C,Rh} = 27.5 Hz, Cq), 166.0 (d, ¹*J*_{C,Rh} = 24.5 Hz, Cq), 164.5 (d, ¹*J*_{C,Rh} = 24.4 Hz, Cq), 150.5, 150.0, 149.3 (Cq), 142.4, 142.2, 140.4, 126.5, 126.4, 126.3, 123.0, 122.8, 122.5, 114.72, 114.68, 114.6, 110.9, 110.7, 110.4 (CH_{Ph}, NCHCHN), 120.9 (doppelte Intensität, Cq), 120.8 (Cq), 107.6 (d, J = 1.8 Hz, Cq), 107.2 (d, J = 1.9 Hz, Cq), 107.2 (d, J = 1.6 Hz, Cq), 37.3, 37.2, 36.1 (CH₃).

## Patentansprüche

1. Verfahren zur Herstellung von cyclometallierten Carbenkomplexen der allgemeinen Formel (I) enthaltend mindestens einen Carbenliganden 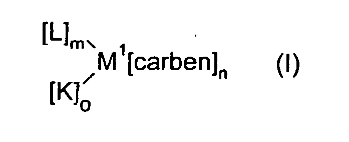 worin die Symbole die folgenden Bedeutungen aufweisen:
M¹ Metallatom ausgewählt aus der Gruppe bestehend aus Ir, Co, Rh, Ni, Pd, Pt, Fe, Ru, Os, Cr, Mo, W, Mn, Tc, Re, Cu und Au, bevorzugt Ir, Os, Ru, Rh, Pd, Co und Pt, besonders bevorzugt Ir, Pt, Rh und Os, in jeder für das entsprechende Metallatom möglichen Oxidationsstufe;
L mono- oder dianionischer Ligand, der bidentat ist;
K neutraler mono- oder bidentater Ligand;
n Zahl der Carbenliganden, wobei n mindestens 1, bevorzugt mindestens 2, ist und die Carbenliganden in dem Komplex der Formel I bei n >1 gleich oder verschieden sein können;
m Zahl der Liganden L, wobei m 0 oder ≥ 1 sein kann und die Liganden L bei m > 1 gleich oder verschieden sein können;
o Zahl der Liganden K, wobei o 0 ist;
wobei die Summe n + m von der Oxidationsstufe und Koordinationszahl des eingesetzten Metallatoms und von der Zähnigkeit der Liganden carben und L sowie von der Ladung der Liganden carben und L abhängig ist, mit der Bedingung, dass n mindestens 1 ist;
carben Carbenligand ausgewählt ist aus der Gruppe bestehend aus 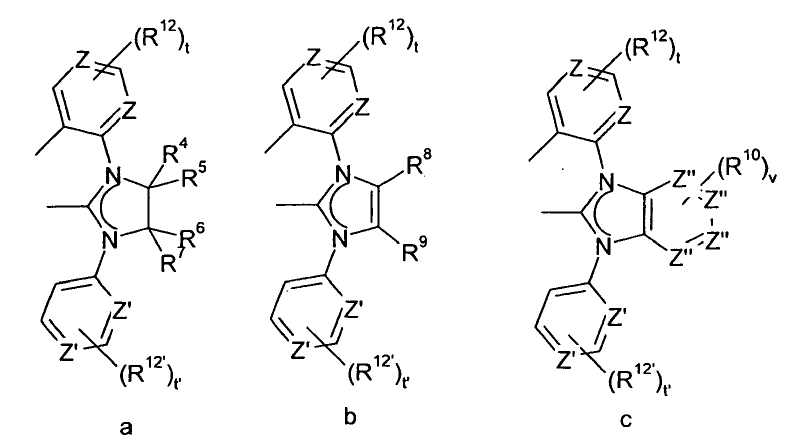 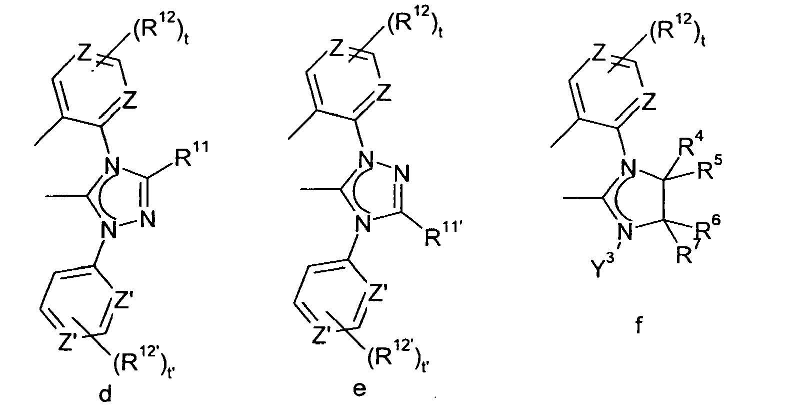 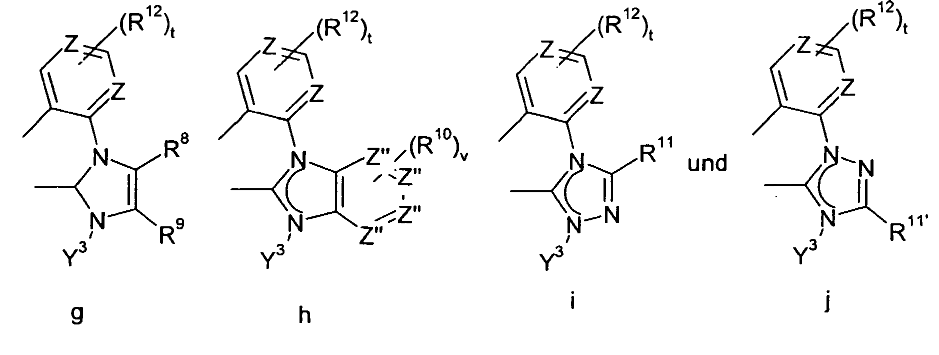 worin die Symbole die folgenden Bedeutungen aufweisen:
Z, Z', Z" gleich oder verschieden CH oder N
R¹², R^{12'} gleich oder verschieden ein Alkyl-, Aryl-, Heteroaryl-, Alkinyl- oder Alkenylrest, oder jeweils 2 Reste R¹² bzw. R^{12'} bilden gemeinsam einen anellierten Ring, der gegebenenfalls mindestens ein Heteroatom enthalten kann, oder R¹² bzw. R^{12'} bedeutet einen Rest mit Donor- oder Akzeptorwirkung;
t und t' gleich oder verschieden 0 bis 4, wobei, wenn t bzw. t' > 1 ist, die Reste R¹² bzw. R^{12'} gleich oder verschieden sein können;
R⁴, R⁵, R⁶, R⁷, R⁸, R⁹ und R¹¹ Wasserstoff, Alkyl, Aryl, Heteroaryl, Alkinyl oder Alkenyl oder ein Rest mit Donor- oder Akzeptorwirkung;
R¹⁰ Alkyl, Aryl, Heteroaryl, Alkinyl oder Alkenyl oder jeweils 2 Reste R¹⁰ bilden gemeinsam einen anellierten Ring, der gegebenenfalls mindestens ein Heteroatom enthalten kann, oder R¹⁰ bedeutet einen Rest mit Donor- oder Akzeptorwirkung;
weiterhin kann die Gruppe der Struktur 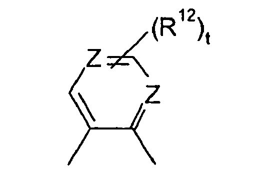 über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R⁸ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:
Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei
x 2 bis 10;
und
R¹⁸, R¹⁹, R²⁰, R²¹, R²², R³⁰, R³¹ H, Alkyl, Aryl, Heteroaryl, Alkenyl, Alkinyl
bedeuten;
wobei in den Fällen, worin die Gruppe der Struktur 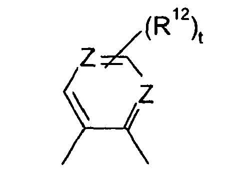 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
v 0 bis 4, wobei, wenn v 0 ist, die vier Kohlenstoffatome des Arylrests in Formel c und h, die gegebenenfalls mit R¹⁰ substituiert sind, Wasserstoffatome tragen;
Y³ Wasserstoff, ein Alkyl-, Aryl-, Heteroaryl-, Alkinyl- oder Alkenylrest,
umfassend die Umsetzung eines Ligandvorläufers ausgewählt aus der Gruppe bestehend aus 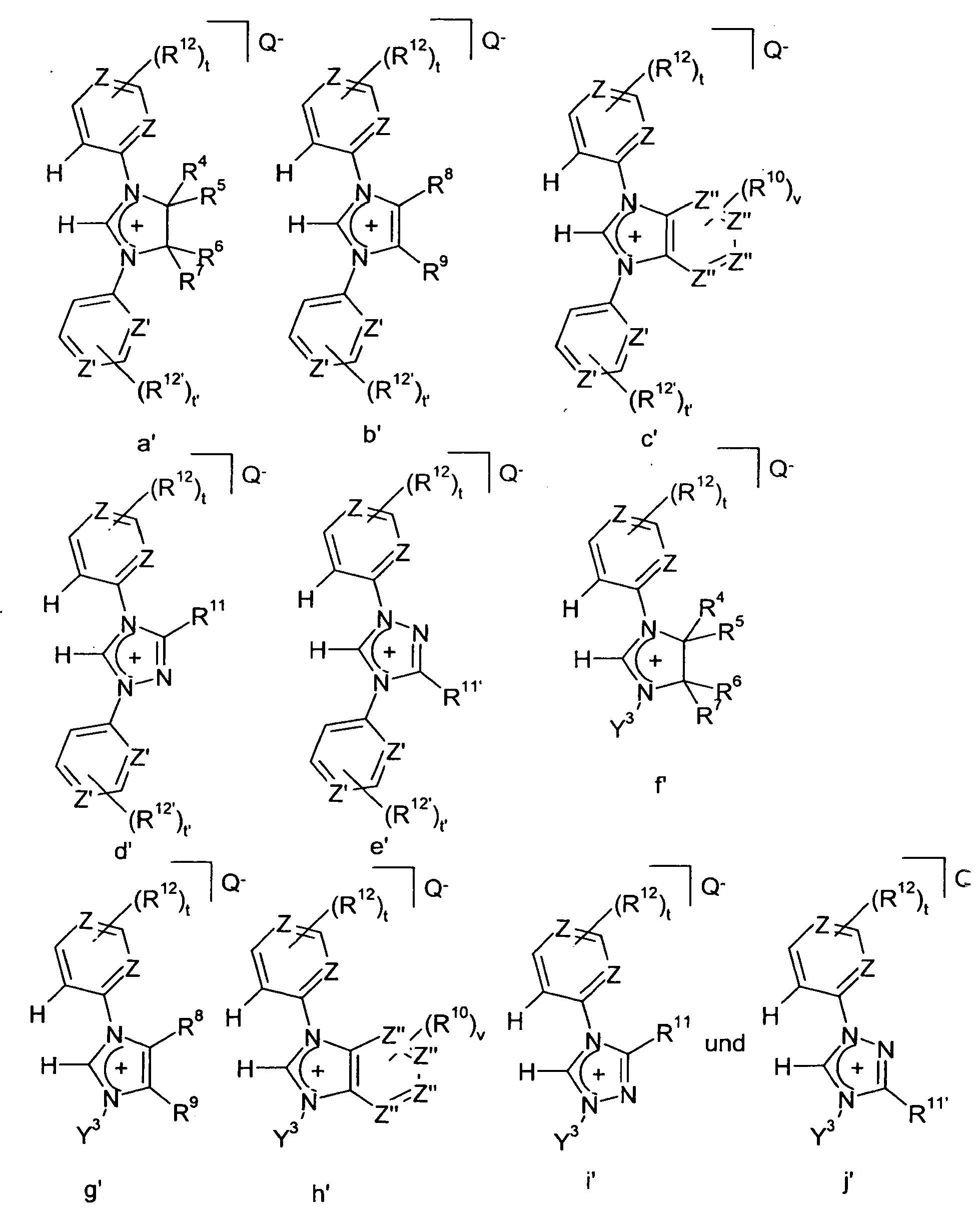 worin
Q⁻ ein monoanionisches Gegenion, bevorzugt Halogenid, Pseudohalogenid, BF₄⁻, BPh₄⁻, PF₆⁻, AsF₆⁻ oder SbF₆⁻;
bedeutet, und
die weiteren Symbole in dem Ligandvorläufer der Formel III die bezüglich dem Liganden der Formel II genannten Bedeutungen aufweisen,
wobei
die Umsetzung den Einsatz einer Base und eines Hilfsreagenzes ausgewählt aus Salzen des Ag (Weg A) umfasst, wobei der Ligandvorläufer der allgemeinen Formel III
(A) mit der Base, einem Metallkomplex enthaltend mindestens ein Metall M¹ und dem Hilfsreagenz umgesetzt wird (Weg A);
wobei ein cyclometallierter Carbenkomplex der Formel I erhalten wird.

2. Verfahren nach Anspruch 1, **dadurch gekennzeichnet, dass**
(A) das Verhältnis von Metallkomplex enthaltend mindestens ein Metall M¹, Ligandvorläufer der Formel III, Base und Hilfsreagenz 1 : 1-10 : 1-10 : 0,5-15 pro Metallatom M¹ und Zahl der Carbenliganden n, bevorzugt 1 : 1-5 : 1-5 : 1-7, besonders bevorzugt 1 : 1-2 : 1-2 : 1-1,5, beträgt (Weg A).

3. Verfahren nach Anspruch 1 oder 2, **dadurch gekennzeichnet, dass** das Verfahren in einem Lösungsmittel durchgeführt wird, wobei als Lösungsmittel bevorzugt a-protische Lösungsmittel eingesetzt werden, besonders bevorzugt ausgewählt aus mindestens einem Lösungsmittel ausgewählt aus der Gruppe bestehend aus Dioxan, Butanon, THF, Toluol, Xylol, DMF, Acetonitril, DMSO, NMP und Pyridin.

4. Verfahren nach einem der Ansprüche 1 bis 3, **dadurch gekennzeichnet, dass** das Verfahren bei einer Temperatur von 60-200°C, bevorzugt bei 70-150°C durchgeführt wird.

5. Verfahren nach einem der Ansprüche 1 bis 4, **dadurch gekennzeichnet, dass** als Metall M¹ Ir, bevorzugt Ir(I) oder Ir(III), besonders bevorzugt Ir(I), eingesetzt wird.

6. Verfahren nach einem der Ansprüche 1 bis 5, **dadurch gekennzeichnet, dass** in Weg A als Base KHMDS, NaHMDS, LiHMDS, KO^{t}Bu, NaO^{t}Bu, LiO^{t}Bu, NaH, KOAc, NaOAc, LiOAc, NEt₃, BuLi, RMgHal, wobei R Alkyl, Aryl oder Alkenyl bedeutet, KOH, NaOH, LiOH, Cs₂CO₃, K ₂CO₃, Na ₂CO₃, Li₂CO₃, Pyridin und/oder DBU eingesetzt wird.

7. Verfahren nach einem der Ansprüche 1 bis 6, **dadurch gekennzeichnet, dass** in Weg A als Hilfsreagenz AgBF₄, AgNO₃, AgPF₆, AgAsF₆, AgSbF₆, AgSCN, Ag₂SO₄, AgOCN, AgCOOCF₃, AgClO₄ und/oder AgOTf eingesetzt wird.

8. Verwendung eines Hilfsreagenzes ausgewählt aus Salzen enthaltend Ag gemeinsam mit einer Base in einem Verfahren zur Herstellung von cyclometallierten Carbenkomplexen der allgemeinen Formel (I) enthaltend mindestens einen Carbenliganden 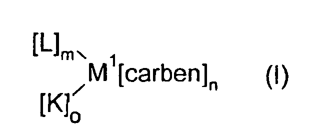 worin die Symbole die folgenden Bedeutungen aufweisen:
M¹ Metallatom ausgewählt aus der Gruppe bestehend aus Ir, Co, Rh, Ni, Pd, Pt, Fe, Ru, Os, Cr, Mo, W, Mn, Tc, Re, Cu und Au, bevorzugt Ir, Os, Ru, Rh, Pd, Co und Pt, besonders bevorzugt Ir, Pt, Rh und Os, in jeder für das entsprechende Metallatom möglichen Oxidationsstufe;
L mono- oder dianionischer Ligand, der bidentat ist;
K neutraler mono- oder bidentater Ligand;
n Zahl der Carbenliganden, wobei n mindestens 1, bevorzugt mindestens 2, ist und die Carbenliganden in dem Komplex der Formel I bei n >1 gleich oder verschieden sein können;
m Zahl der Liganden L, wobei m 0 oder ≥ 1 sein kann und die Liganden L bei m > 1 gleich oder verschieden sein können;
o Zahl der Liganden K, wobei o 0 ist;
wobei die Summe n + m von der Oxidationsstufe und Koordinationszahl des eingesetzten Metallatoms und von der Zähnigkeit der Liganden carben und L sowie von der Ladung der Liganden carben und L abhängig ist, mit der Bedingung, dass n mindestens 1 ist;
carben Carbenligand ausgewählt ist aus der Gruppe bestehend aus 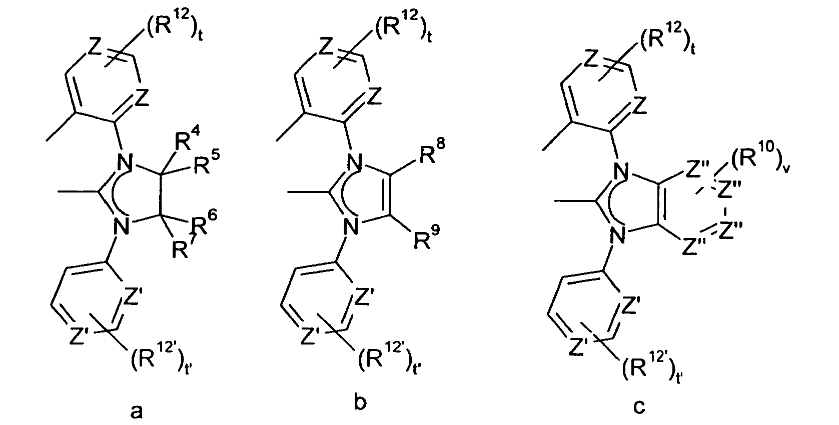 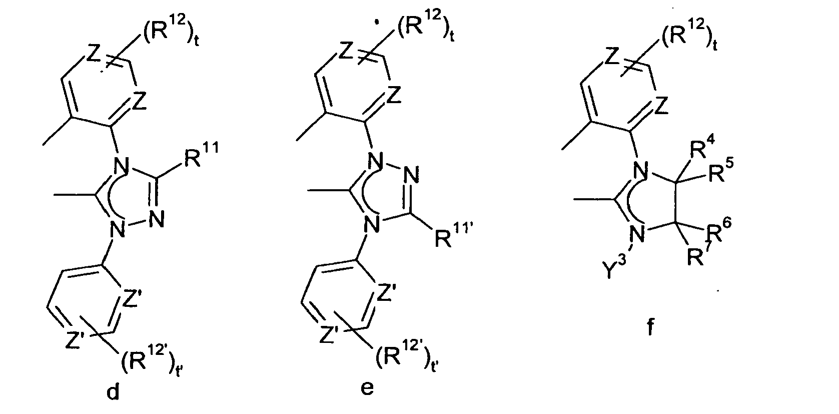 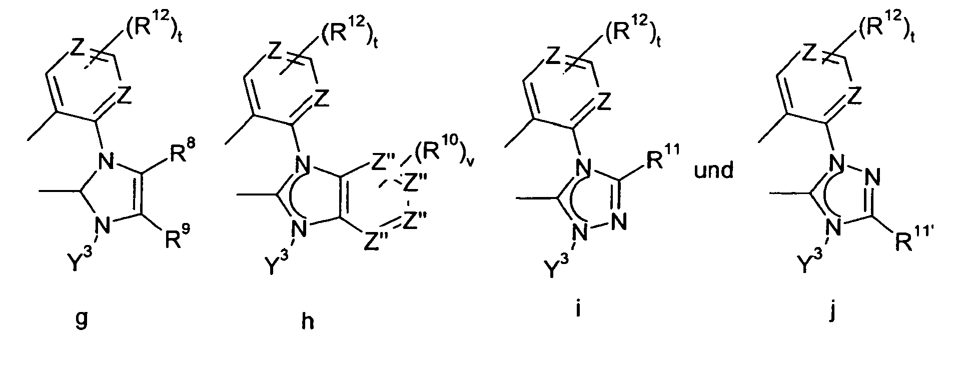
worin die Symbole die folgenden Bedeutungen aufweisen:
Z, Z', Z" gleich oder verschieden CH oder N
R¹², R^{12'} gleich oder verschieden ein Alkyl-, Aryl-, Heteroaryl-, Alkinyl- oder Alkenylrest, oder jeweils 2 Reste R¹² bzw. R^{12'} bilden gemeinsam einen anellierten Ring, der gegebenenfalls mindestens ein Heteroatom enthalten kann, oder R¹² bzw. R^{12'} bedeutet einen Rest mit Donor- oder Akzeptorwirkung;
t und t' gleich oder verschieden 0 bis 4, wobei, wenn t bzw. t' > 1 ist, die Reste R¹² bzw. R^{12'} gleich oder verschieden sein können;
R⁴, R⁵, R⁶, R⁷, R⁸, R⁹ und R¹¹ Wasserstoff, Alkyl, Aryl, Heteroaryl, Alkinyl oder Alkenyl oder ein Rest mit Donor- oder Akzeptorwirkung;
R¹⁰ Alkyl, Aryl, Heteroaryl, Alkinyl oder Alkenyl oder jeweils 2 Reste R¹⁰ bilden gemeinsam einen anellierten Ring, der gegebenenfalls mindestens ein Heteroatom enthalten kann, oder R¹⁰ bedeutet einen Rest mit Donor- oder Akzeptorwirkung;
weiterhin kann die Gruppe der Struktur 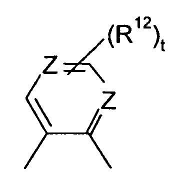
über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R⁸ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:
Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei
x 2 bis 10;
und
R¹⁸, R¹⁹, R²⁰, R²¹, R²², R³⁰, R³¹ H, Alkyl, Aryl, Heteroaryl, Alkenyl, Alkinyl
bedeuten;
wobei in den Fällen, worin die Gruppe der Struktur 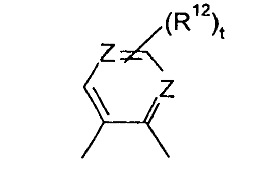 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
v 0 bis 4, wobei, wenn v 0 ist, die vier Kohlenstoffatome des Arylrests in Formel c und h, die gegebenenfalls mit R¹⁰ substituiert sind, Wasserstoffatome tragen;
Y³ Wasserstoff, ein Alkyl-, Aryl-, Heteroaryl-, Alkinyl- oder Alkenylrest.

## Claims

1. A process for preparing cyclometallated carbene complexes of the general formula (I) comprising at least one carbene ligand 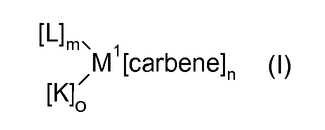 where the symbols have the following meanings:
M¹ is a metal atom selected from the group consisting of Ir, Co, Rh, Ni, Pd, Pt, Fe, Ru, Os, Cr, Mo, W, Mn, Tc, Re, Cu and Au, preferably Ir, Os, Ru, Rh, Pd, Co and Pt, particularly preferably Ir, Pt, Rh and Os, in any oxidation state possible for the respective metal atom;
L is a monoanionic or dianionic ligand which is bidentate;
K is an uncharged monodentate or bidentate ligand;
n is the number of carbene ligands, with n being at least 1, preferably at least 2, and the carbene ligands in the complex of the formula I being able to be identical or different in the case of n >1;
m is the number of ligands L, with m being able to be 0 or ≥ 1 and the ligands L being able to be identical or different in the case of m > 1;
o is the number of ligands K, with O being 0;
where the sum n + m is dependent on the oxidation state and coordination number of the metal atom used and on the denticity of the ligands carbene and L and also on the charge on the ligands carbene and L, with the proviso that n is at least 1;
carbene is a carbene ligand selected from the group consisting of 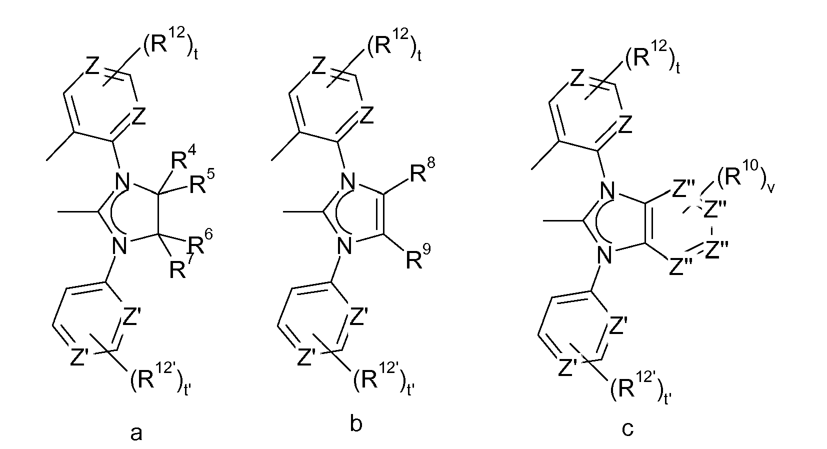 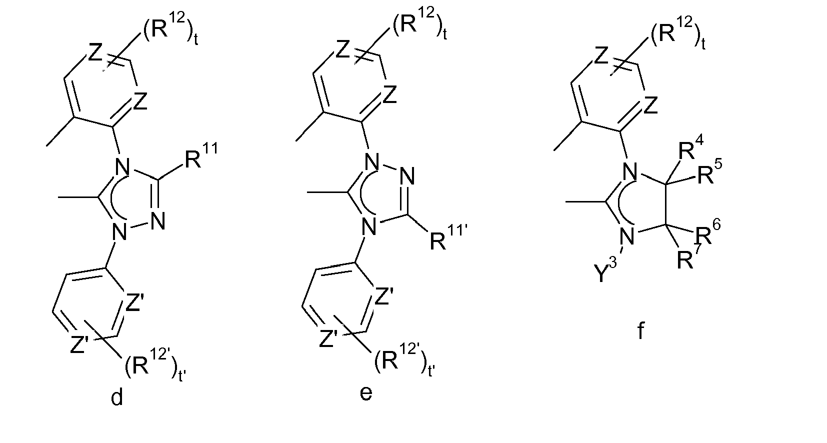 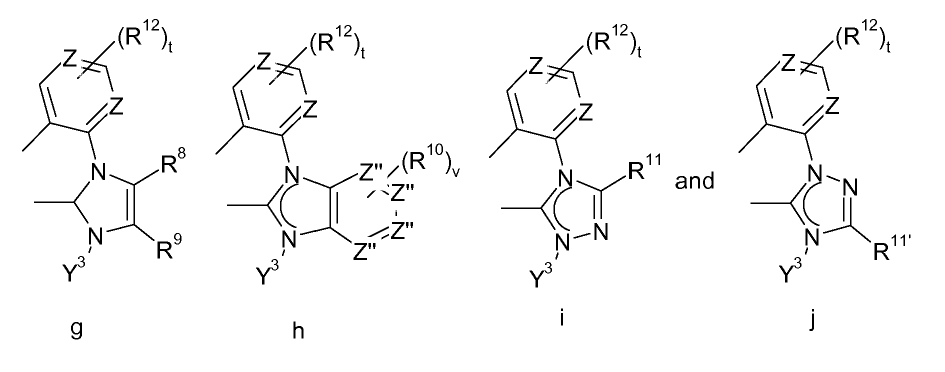
where the symbols have the following meanings:
Z " Z', Z" are identical or different and are each CH or N;
R¹², R^{12'} are identical or different and are each an alkyl, aryl, heteroaryl, alkynyl or alkenyl radical, or 2 radicals R¹² or R^{12'} together form a fused-on ring which may optionally comprise at least one heteroatom, or R¹² or R^{12'} is a radical having a donor or acceptor action;
t and t' are identical or different and are each from 0 to 4, where, when t or t' is > 1, the radicals R¹² or R^{12'} can be identical or different;
R⁴, R⁵, R⁶, R⁷, R⁸, R⁹ and R¹¹ are each hydrogen, alkyl, aryl, heteroaryl, alkynyl or alkenyl or a radical having a donor or acceptor action;
R¹⁰ is alkyl, aryl, heteroaryl, alkynyl or alkenyl, or 2 radicals R¹⁰ together form a fused-on ring which may optionally comprise at least one heteroatom, or R¹⁰ is a radical having a donor or acceptor action;
with the group of the structure 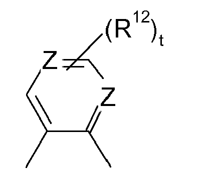 also being able to be joined via the aromatic basic skeleton or via one of the radicals R¹² to R⁴ or R⁵ or the carbon atom to which R⁴ and R⁵ are bound in the groups a and f, R⁸ or the carbon atom to which R⁸ is bound in the groups b and g, one of the radicals R¹⁰ or one of the carbon atoms to which R¹⁰ is bound in the groups c and h and R¹¹ or the carbon atom to which R¹¹ is bound in the groups d and i via a bridge which can have the following meanings:
alkylene, arylene, heteroarylene, alkynylene, alkenylene, NR¹⁸, PR¹⁹, BR²⁰, O, S, SO, SO₂, SiR³⁰R³¹, CO, CO-O, O-CO and (CR²¹R²²)ₓ, where one or more nonadjacent (CR²¹R²²) groups may be replaced by NR¹⁸, PR¹⁹, BR²⁰, O, S, SO, SO₂, SiR³⁰R³¹, CO, CO-O, O-CO, where
x is from 2 to 10;
and
R¹⁸, R¹⁹, R²⁰, R²¹, R²², R³⁰, R³¹ are each H, alkyl, aryl, heteroaryl, alkenyl, alkynyl;
where in the cases in which the group of the structure 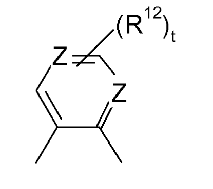
is linked via a bridge to the carbon atom to which R⁴ and R⁵ are bound (groups a and f), the carbon atom to which R⁸ is bound (groups b and g), one of the carbon atoms to which R¹⁰ is bound (groups c and h) or the carbon atom to which R¹¹ is bound (groups d and i), and
the respective radical R⁴ or R⁵, R⁸, one of the radicals R¹⁰ and R¹¹ is replaced by a bond to the bridge;
v is from 0 to 4, where, when v is 0, the four carbon atoms of the aryl radical in formulae c and h which are optionally substituted by R¹⁰ bear hydrogen atoms;
Y³ is hydrogen, an alkyl, aryl, heteroaryl, alkynyl or alkenyl radical,
which comprises reaction of a ligand precursor selected from the group consisting of 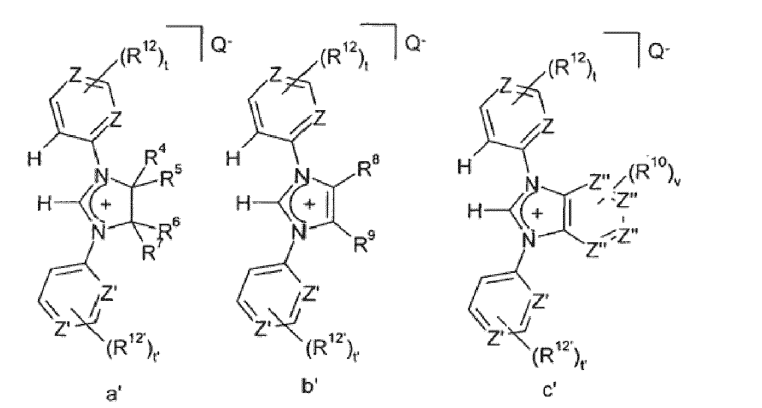 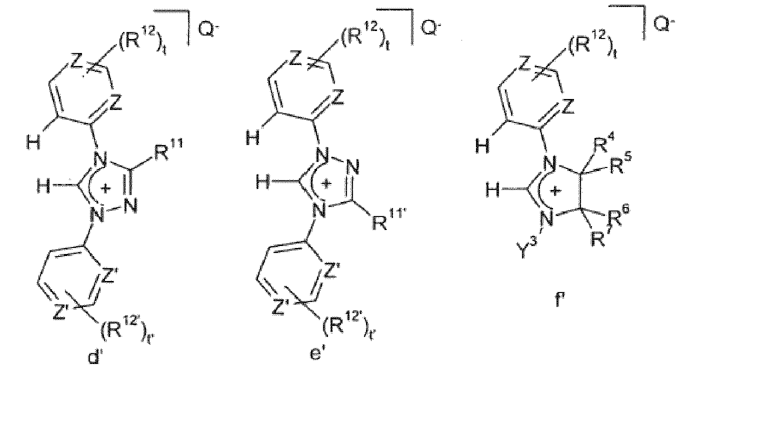 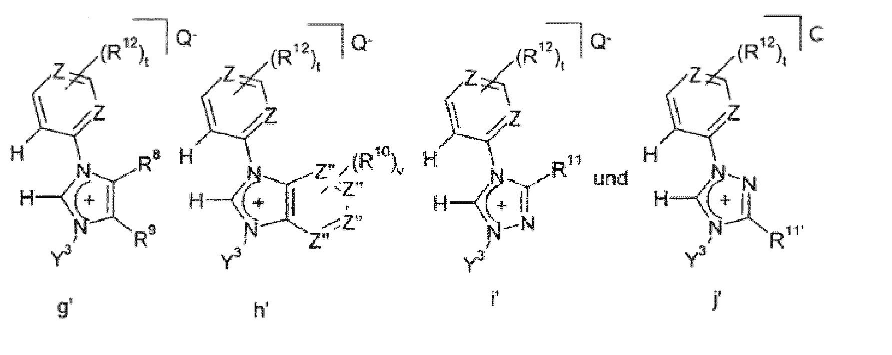
where
Q⁻ is a monoanionic counterion, preferably halide, pseudohalide, BF₄⁻, BPh₄⁻, PF₆⁻, AsF₆ or SbF₆⁻; and
the further symbols in the ligand precursor of the formula III have the meanings given in respect of the ligand of the formula II,
wherein
the reaction comprises the use of a base and an auxiliary reagent selected from among salts of Ag (route A) and the ligand precursor of the general formula III is
(A) reacted with the base, a metal complex comprising at least one metal M¹ and the auxiliary reagent (route A) ;
to give a cyclometallated carbene complex of the formula I.

2. The process according to claim 1, wherein
(A) the ratio of metal complex comprising at least one metal M¹, ligand precursor of the formula III, base and auxiliary reagent is 1 : 1-10 : 1-10 : 0.5-15 per metal atom M¹ and number of carbene ligands n, preferably 1 : 1-5 : 1-5 : 1-7, particularly preferably 1 : 1-2 : 1-2 : 1-1.5 (route A).

3. The process according to claim 1 or 2, wherein the process is carried out in a solvent, with aprotic solvents, particularly preferably solvents selected from at least one solvent selected from the group consisting of dioxane, butanone, THF, toluene, xylene, DMF, acetonitrile, DMSO, NMP and pyridine, preferably being used as solvents.

4. The process according to any of claims 1 to 3, wherein the process is carried out at a temperature of 60-200°C, preferably 70-150°C.

5. The process according to any of claims 1 to 4, wherein Ir, preferably Ir(I) or Ir(III), particularly preferably Ir(I), is used as metal M¹.

6. The process according to any of claims 1 to 5, wherein KHMDS, NaHMDS, LiHMDS, KO^{t}Bu, NaO^{t}Bu, LiO^{t}Bu, NaH, KOAc, NaOAc, LiOAc, NEt₃, BuLi, RMgHal, where R is alkyl, aryl or alkenyl, KOH, NaOH, LiOH, Cs₂CO₃, K₂CO₃, Na₂CO₃, Li₂CO₃, pyridine and/or DBU is used as base in route A.

7. The process according to any of claims 1 to 6, wherein AgBF₄, AgNO₃, AgPF₆, AgAsF₆, AgSbF₆, AgSCN, Ag₂SO₄, AgOCN, AgCOOCF₃, AgClO₄ and/or AgOTf is used as auxiliary reagent in route A.

8. The use of an auxiliary reagent selected from among salts comprising Ag together with a base in a process for preparing cyclometallated carbene complexes of the general formula (I) comprising at least one carbene ligand 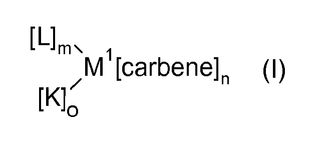 where the symbols have the following meanings:
M¹ is a metal atom selected from the group consisting of Ir, Co, Rh, Ni, Pd, Pt, Fe, Ru, Os, Cr, Mo, W, Mn, Tc, Re, Cu and Au, preferably Ir, Os, Ru, Rh, Pd, Co and Pt, particularly preferably Ir, Pt, Rh and Os, in any oxidation state possible for the respective metal atom;
L is a monoanionic or dianionic ligand which is bidentate;
K is an uncharged monodentate or bidentate ligand;
n is the number of carbene ligands, with n being at least 1, preferably at least 2, and the carbene ligands in the complex of the formula I being able to be identical or different in the case of n >1;
m is the number of ligands L, with m being able to be 0 or ≥ 1 and the ligands L being able to be identical or different in the case of m > 1;
o is the number of ligands K, with o being 0;
where the sum n + m is dependent on the oxidation state and coordination number of the metal atom used and on the denticity of the ligands carbene and L and also on the charge on the ligands carbene and L, with the proviso that n is at least 1;
carbene is a carbene ligand selected from the group consisting of 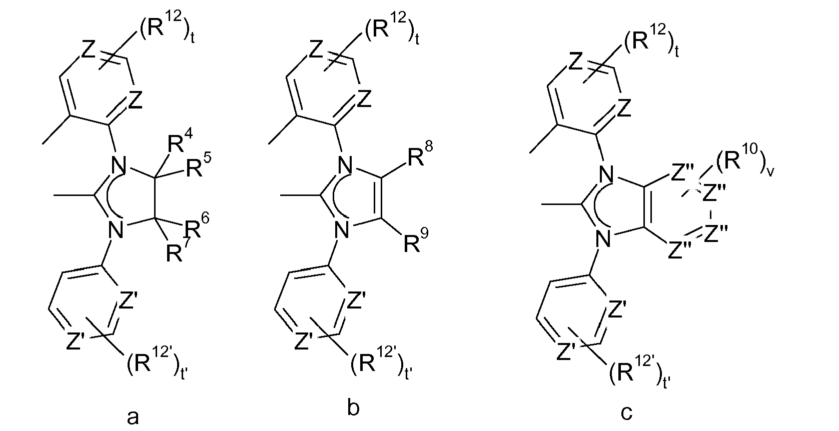 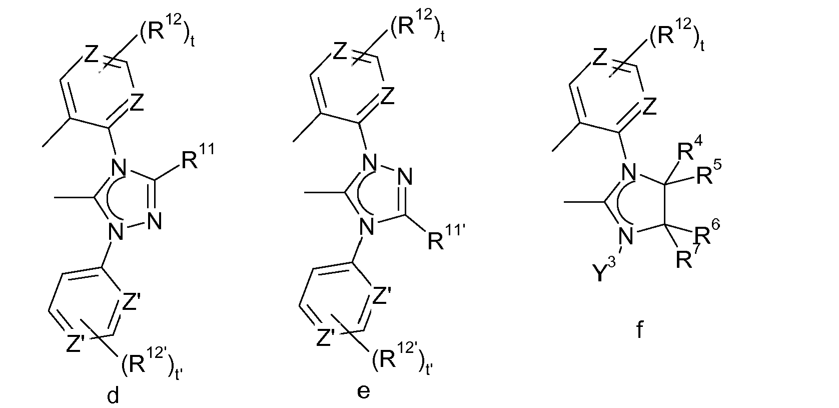 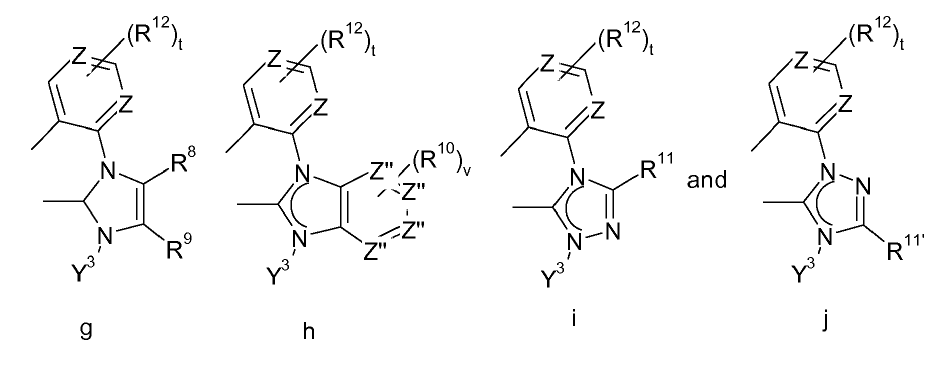
where the symbols have the following meanings:
Z, Z', Z" are identical or different and are each CH or N;
R¹², R^{12'} are identical or different and are each an alkyl, aryl, heteroaryl, alkynyl or alkenyl radical, or 2 radicals R¹² or R^{12'} together form a fused-on ring which may optionally comprise at least one heteroatom, or R¹² or R^{12'} is a radical having a donor or acceptor action;
t and t' are identical or different and are each from 0 to 4, where, when t or t' is > 1, the radicals R¹² or R^{12'} can be identical or different;
R⁴, R⁵, R⁶, R⁷, R⁸, R⁹ and R¹¹ are each hydrogen, alkyl, aryl, heteroaryl, alkynyl or alkenyl or a radical having a donor or acceptor action;
R¹⁰ is alkyl, aryl, heteroaryl, alkynyl or alkenyl, or 2 radicals R¹⁰ together form a fused-on ring which may optionally comprise at least one heteroatom, or R¹⁰ is a radical having a donor or acceptor action;
with the group of the structure 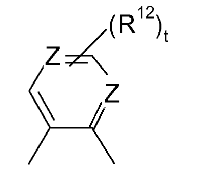
also being able to be joined via the aromatic basic skeleton or via one of the radicals R¹² to R⁴ or R⁵ or the carbon atom to which R⁴ and R⁵ are bound in the groups a and f, R⁸ or the carbon atom to which R⁸ is bound in the groups b and g, one of the radicals R¹⁰ or one of the carbon atoms to which R¹⁰ is bound in the groups c and h and R¹¹ or the carbon atom to which R¹¹ is bound in the groups d and i via a bridge which can have the following meanings:
alkylene, arylene, heteroarylene, alkynylene, alkenylene, NR¹⁸, PR¹⁹, BR²⁰, O, S, SO, SO₂, SiR³⁰R³¹, CO, CO-O, O-CO and (CR²¹R²²)ₓ, where one or more nonadjacent (CR²¹R²²) groups may be replaced by NR¹⁸, PR¹⁹, BR²⁰, O, S, SO, SO₂, SiR³⁰R³¹, CO, CO-O, O-CO, where
x is from 2 to 10;
and
R¹⁸, R¹⁹, R²⁰, R²¹, R²², R³⁰, R³¹ are each H, alkyl, aryl, heteroaryl, alkenyl, alkynyl;
where in the cases in which the group of the structure 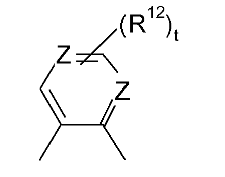
is linked via a bridge to the carbon atom to which R⁴ and R⁵ are bound (groups a and f), the carbon atom to which R⁸ is bound (groups b and g), one of the carbon atoms to which R¹⁰ is bound (groups c and h) or the carbon atom to which R¹¹ is bound (groups d and i), and the respective radical R⁴ or R⁵, R⁸, one of the radicals R¹⁰ and R¹¹ is replaced by a bond to the bridge;
v is from 0 to 4, where, when v is 0, the four carbon atoms of the aryl radical in formulae c and h which are optionally substituted by R¹⁰ bear hydrogen atoms;
Y³ is hydrogen, an alkyl, aryl, heteroaryl, alkynyl or alkenyl radical.

## Revendications

1. Procédé pour la préparation de complexes de carbène cyclométallisés de formule générale (I) contenant au moins un ligand carbène 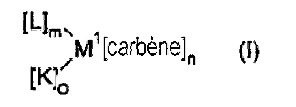 où les symboles présentent les significations suivantes :
M¹ atome métallique choisi dans le groupe constitué par Ir, Co, Rh, Ni, Pd, Pt, Fe, Ru, Os, Cr, Mo, W, Mn, Tc, Re, Cu et Au, de préférence Ir, Os, Ru, Rh, Pd, Co et Pt, de manière particulièrement préférée Ir, Pt, Rh et Os, dans chaque étage d'oxydation possible pour l'atome de métal correspondant ;
L ligand monoanionique ou dianionique, qui est bidentate ;
K ligand monodentate ou bidentate neutre ;
n nombre de ligands carbène, n valant au moins 1, de préférence au moins 2, et les ligands carbène dans le complexe de formule I pour n > 1 pouvant être identiques ou différents ;
m nombre de ligands L, m pouvant valoir 0 ou être ≥ 1 et les ligands L pour m > 1 pouvant être identiques ou différents ;
o nombre de ligands K, o valant 0 ;
la somme n + m dépendant de l'étage d'oxydation et de l'indice de coordination de l'atome de métal utilisé et de la valence des ligands carbène et L ainsi que de la charge des ligands carbène et de L, à condition que n vaille au moins 1 ;
carben ligand carbène choisi dans le groupe constitué par : 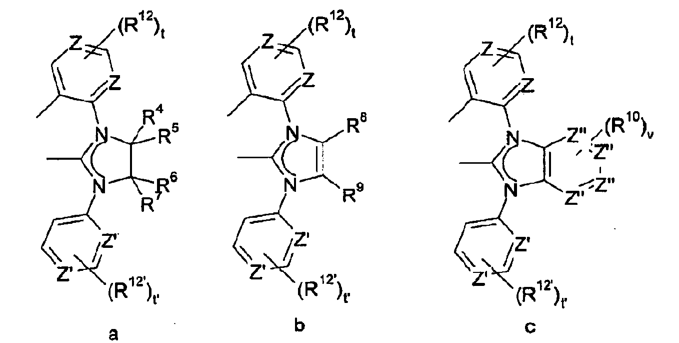 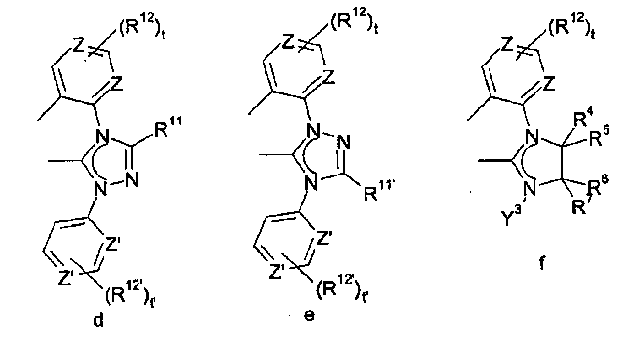 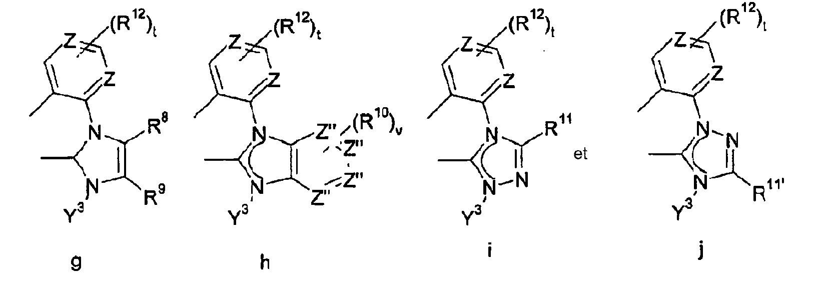 où les symboles présentent les significations suivantes :
Z, Z', Z" identiques ou différents, CH ou N
R¹², R^{12'} identiques ou différents, radical alkyle, aryle, hétéroaryle, alcynyle ou alcényle ou à chaque fois 2 radicaux R¹² ou, selon le cas, R^{12'} forment ensemble un cycle condensé, qui peut le cas échéant contenir au moins un hétéroatome, ou R¹² ou, selon le cas, R^{12'} signifie un radical doté d'un effet donneur ou accepteur ;
t et t' identiques ou différents, 0 à 4, où, lorsque t ou, selon le cas, t' > 1, les radicaux R¹² ou, selon le cas, R¹²' peuvent être identiques ou différents ;
R⁴, R⁵, R⁶, R⁷, R⁸, R⁹ et R¹¹ hydrogène, alkyle, aryle, hétéroaryle, alcynyle ou alcényle ou un radical doté d'un effet donneur ou accepteur ;
R¹⁰ alkyle, aryle, hétéroaryle, alcynyle ou alcényle ou à chaque fois 2 radicaux R¹⁰ forment ensemble un cycle condensé, qui peut le cas échéant contenir au moins un hétéroatome, ou R¹⁰ signifie un radical doté d'un effet donneur ou accepteur ;
en outre, le groupe de structure 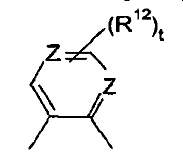 peut être lié via le corps de base aromatique ou via un des radicaux R¹² à R⁴ ou à R⁵ ou à l'atome de carbone auquel sont liés R⁴ et R⁵ dans les groupements a et f, à R⁸ ou à l'atome de carbone auquel est lié R⁸ dans les groupements b et g, à un des radicaux R¹⁰ ou à un des atomes de carbone auxquels R¹⁰ est lié dans les groupements c et h et à R¹¹ ou à l'atome de carbone auquel R¹¹ est lié dans les groupements d et i, via un pont, le pont pouvant présentant les significations suivantes :
alkylène, arylène, hétéroarylène, alcynylène, alcénylène, NR¹⁸, PR¹⁹, BR²⁰, O, S, SO, SO₂, SiR³⁰R³¹, CO, CO-O, O-CO et (CR²¹R²²)_{x,} un ou plusieurs groupes (CR²¹R²²) non adjacents pouvant être remplacés par NR¹⁸, PR¹⁹, BR²⁰, O, S, SO, SO₂, SiR³⁰R³¹, CO, CO-O, O-CO, où
x vaut 2 à 10 ; et
R¹⁸, R¹⁹, R²⁰, R²¹, R²², R³⁰, R³¹ signifient H, alkyle, aryle, hétéroaryle, alcényle, alcynyle
où, dans les cas dans lesquels le groupe de structure 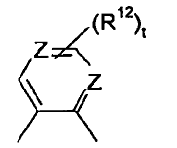 est lié via un pont à l'atome de carbone auquel R⁴ et R⁵ sont liés (groupements a et f), à l'atome de carbone auquel R⁸ est lié (groupements b et g), à un des atomes de carbone auxquels R¹⁰ est lié (groupements c et h) ou à l'atome de carbone auquel R¹¹ est lié (groupements d et i), chaque radical R⁴ ou R⁵, R⁸, un des radicaux R¹⁰ ou R¹¹ est remplacé par une liaison au pont ;
v 0 à 4, où, lorsque v vaut 0, les quatre atomes de carbone du radical aryle dans la formule c et h, qui sont le cas échéant substitués par R¹⁰, portent des atomes d'hydrogène ;
Y³ hydrogène, un radical alkyle, aryle, hétéroaryle, alcynyle ou alcényle
comprenant la transformation d'un précurseur de ligand, choisi dans le groupe constitué par : 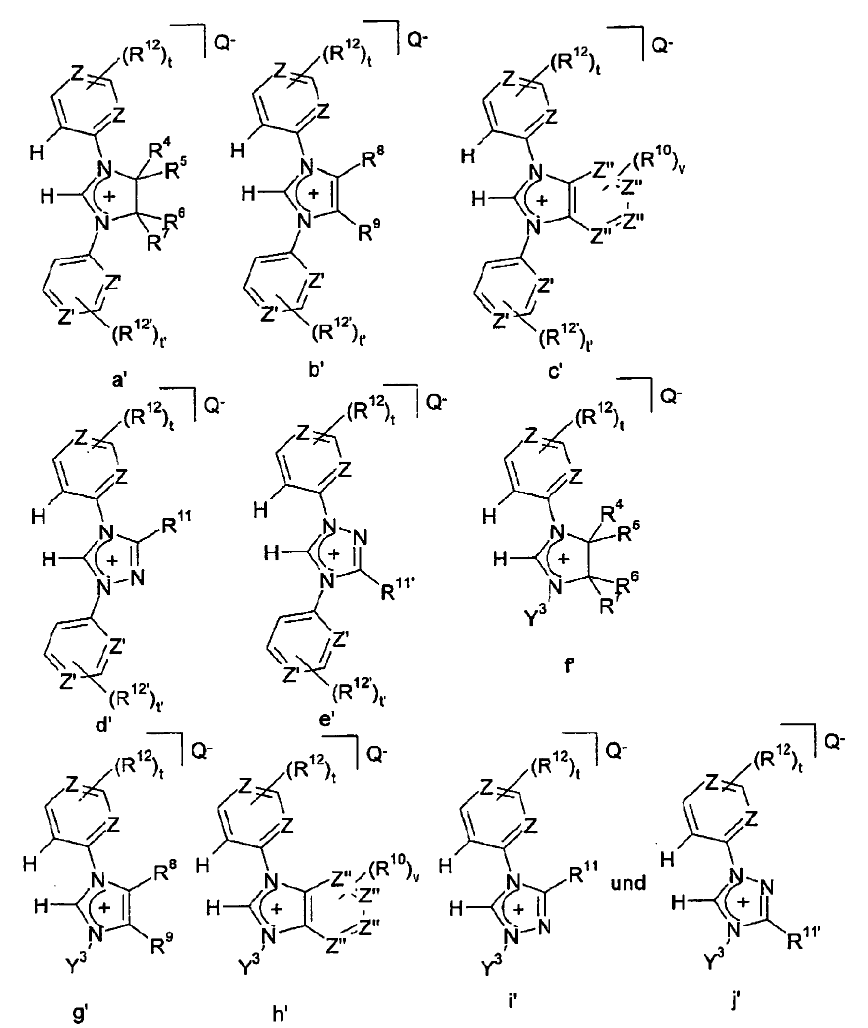 où
Q⁻ signifie un contre-ion monoanionique, de préférence halogénure, pseudohalogénure, BF₄⁻, BPh₄⁻, PF₆⁻, AsF₆⁻ ou SbF₆⁻ ; et
les autres symboles dans le précurseur de ligand de la formule III présentent les significations mentionnées en ce qui concerne les ligands des formules II,
la transformation comprenant l'utilisation d'une base et d'un réactif auxiliaire choisi parmi les sels d'Ag (voie A), le précurseur de ligand de formule générale III
(A) étant transformé avec la base, un complexe métallique contenant au moins un métal M¹ et un réactif auxiliaire (voie A);
un complexe de carbène cyclométallisé de formule générale I étant obtenu.

2. Procédé selon la revendication 1, **caractérisé en ce que**
(A) le rapport du complexe métallique contenant au moins un métal M¹, du précurseur de ligand de formule III, de la base et du réactif auxiliaire basique vaut 1:1-10:1-10:0,5-15 par atome métallique M¹ et le nombre de ligands carbène n, de préférence 1:1-5:1-5:1-7, de manière particulièrement préférée 1:1-2:1-2:,1-1,5 (voie A) .

3. Procédé selon la revendication 1 ou 2, **caractérisé en ce que** le procédé est réalisé dans un solvant, en utilisant comme solvant de préférence des solvants aprotiques, de manière particulièrement préférée choisis parmi au moins un solvant choisi dans le groupe constitué par le dioxane, la butanone, le THF, le toluène, le xylène, le DMF, l'acétonitrile, le DMSO, la NMP et la pyridine.

4. Procédé selon l'une quelconque des revendications 1 à 3, **caractérisé en ce que** le procédé est réalisé à une température de 60-200°C, de préférence à 70-150°C.

5. Procédé selon l'une quelconque des revendications 1 à 4, **caractérisé en ce qu'**on utilise, comme métal M¹, Ir, de préférence Ir(I) ou Ir(III), de manière particulièrement préférée Ir(I).

6. Procédé selon l'une quelconque des revendications 1 à 5, **caractérisé en ce que** dans la voie A, on utilise comme base KHMDS, NaHMDS, LiHMDS, KO^{t}Bu, NaO^{t}Bu, LiO^{t}Bu, NaH, KOAc, NaOAc, LiOAc, NEt₃, BuLi, RMgHal, où R signifie alkyle, aryle ou alcényle, KOH, NaOH, LiOH, Cs₂CO₃, K₂CO₃, Na₂CO₃, Li₂CO₃, pyridine et/ou DBU.

7. Procédé selon l'une quelconque des revendications 1 à 6, **caractérisé en ce qu'**on utilise dans la voie A comme réactif auxiliaire AgBF₄, AgNO₃, AgPF₆, AgAsF₆, AgSbF₆, AgSCN, Ag₂SO₄, AgOCN, AgCOOCF₃, AgClO₄ et/ou AgOTf.

8. Utilisation d'un réactif auxiliaire choisi parmi les sels contenant de l'Ag, ensemble avec une base, dans un procédé pour la préparation de complexes de carbène cyclométallisés de formule générale (I) contenant au moins un ligand carbène 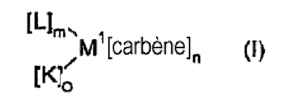 où les symboles présentent les significations suivantes :
M¹ atome métallique choisi dans le groupe constitué par Ir, Co, Rh, Ni, Pd, Pt, Fe, Ru, Os, Cr, Mo, W, Mn, Tc, Re, Cu et Au, de préférence Ir, Os, Ru, Rh, Pd, Co et Pt, de manière particulièrement préférée Ir, Pt, Rh et Os, dans chaque étage d'oxydation possible pour l'atome de métal correspondant ;
L ligand monoanionique ou dianionique, qui est bidentate ;
K ligand monodentate ou bidentate neutre ;
n nombre de ligands carbène, n valant au moins 1, de préférence au moins 2, et les ligands carbène dans le complexe de formule I pour n > 1 pouvant être identiques ou différents ;
m nombre de ligands L, m pouvant valoir 0 ou être ≥ 1 et les ligands L pour m > 1 pouvant être identiques ou différents ;
o nombre de ligands K, o valant 0 ;
la somme n + m dépendant de l'étage d'oxydation et de l'indice de coordination de l'atome de métal utilisé et de la valence des ligands carbène et L ainsi que de la charge des ligands carbène et de L, à condition que n vaille au moins 1 ;
carben ligand carbène choisi dans le groupe constitué par : 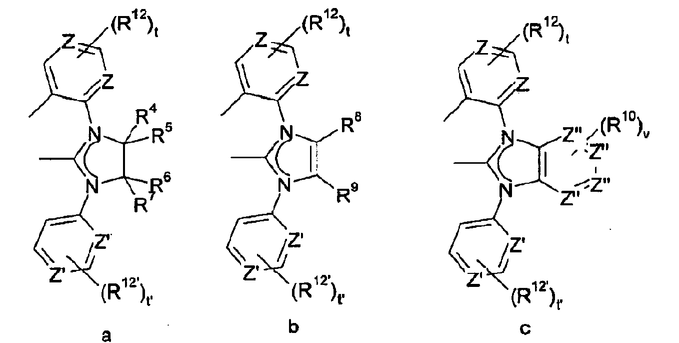 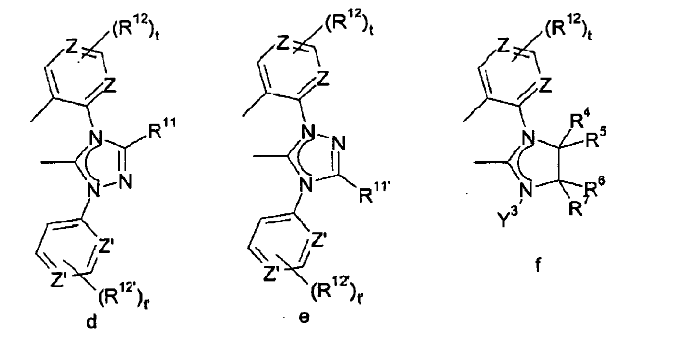 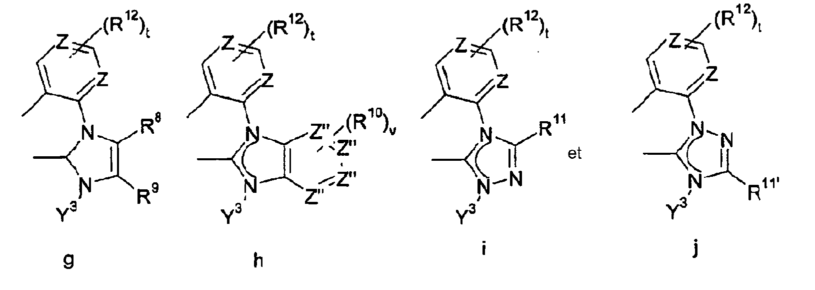 où les symboles présentent les significations suivantes :
Z, Z', Z" identiques ou différents, CH ou N
R¹², R^{12'} identiques ou différents, radical alkyle, aryle, hétéroaryle, alcynyle ou alcényle ou à chaque fois 2 radicaux R¹² ou, selon le cas, R^{12'} forment ensemble un cycle condensé, qui peut le cas échéant contenir au moins un hétéroatome, ou R¹² ou, selon le cas, R^{12'} signifie un radical doté d'un effet donneur ou accepteur ;
t et t' identiques ou différents, 0 à 4, où, lorsque t ou, selon le cas, t' > 1, les radicaux R¹² ou, selon le cas, R¹²' peuvent être identiques ou différents ;
R⁴, R⁵, R⁶, R⁷, R⁸, R⁹ et R¹¹ hydrogène, alkyle, aryle, hétéroaryle, alcynyle ou alcényle ou un radical doté d'un effet donneur ou accepteur ;
R¹⁰ alkyle, aryle, hétéroaryle, alcynyle ou alcényle ou à chaque fois 2 radicaux R¹⁰ forment ensemble un cycle condensé, qui peut le cas échéant contenir au moins un hétéroatome, ou R¹⁰ signifie un radical doté d'un effet donneur ou accepteur ;
en outre, le groupe de structure 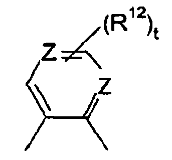 peut être lié via le corps de base aromatique ou via un des radicaux R¹² à R⁴ ou à R⁵ ou à l'atome de carbone auquel sont liés R⁴ et R⁵ dans les groupements a et f, à R⁸ ou à l'atome de carbone auquel est lié R⁸ dans les groupements b et g, à un des radicaux R¹⁰ ou à un des atomes de carbone auxquels R¹⁰ est lié dans les groupements c et h et à R¹¹ ou à l'atome de carbone auquel R¹¹ est lié dans les groupements d et i, via un pont, le pont pouvant présentant les significations suivantes :
alkylène, arylène, hétéroarylène, alcynylène, alcénylène, NR¹⁸, PR¹⁹, BR²⁰, O, S, SO, SO₂, SiR³⁰R³¹, CO, CO-O, O-CO et (CR²¹R²²)ₓ, un ou plusieurs groupes (CR²¹R²²) non adjacents pouvant être remplacés par NR¹⁸, PR¹⁹, BR²⁰, O, S, SO, SO₂, SiR³⁰R³¹, CO, CO-O, O-CO, où
x vaut 2 à 10 ; et
R¹⁸, R¹⁹, R²⁰, R²¹, R²², R³⁰, R³¹ signifient H, alkyle, aryle, hétéroaryle, alcényle, alcynyle
où, dans les cas dans lesquels le groupe de structure 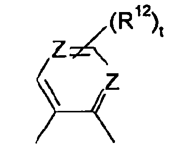 est lié via un pont à l'atome de carbone auquel R⁴ et R⁵ sont liés (groupements a et f), à l'atome de carbone auquel R⁸ est lié (groupements b et g), à un des atomes de carbone auxquels R¹⁰ est lié (groupements c et h) ou à l'atome de carbone auquel R¹¹ est lié (groupements d et i), chaque radical R⁴ ou R⁵, R⁸, un des radicaux R¹⁰ ou R¹¹ est remplacé par une liaison au pont ;
v 0 à 4, où, lorsque v vaut 0, les quatre atomes de carbone du radical aryle dans la formule c et h, qui sont le cas échéant substitués par R¹⁰, portent des atomes d'hydrogène ;
Y³ hydrogène, un radical alkyle, aryle, hétéroaryle, alcynyle ou alcényle.
